(19) **Europäisches Patentamt**
**European Patent Office**
**Office européen des brevets**

(11) **EP 3 602 958 B1**

(12) **EUROPÄISCHE PATENTSCHRIFT**

(45) Veröffentlichungstag und Bekanntmachung des Hinweises auf die Patenterteilung:
**29.07.2026 Patentblatt 2026/31**

(21) Anmeldenummer: **18714232.8**

(22) Anmeldetag: **27.03.2018**

(51) Internationale Patentklassifikation (IPC):
**H04L 9/32** (2006.01)   **G06F 21/32** (2013.01)
**H04L 9/30** (2006.01)

(52) Gemeinsame Patentklassifikation (CPC):
**H04L 9/3231; G06F 21/32; H04L 9/3026**

(86) Internationale Anmeldenummer:
**PCT/EP2018/057797**

(87) Internationale Veröffentlichungsnummer:
**WO 2018/178087 (04.10.2018 Gazette 2018/40)**

(54) **BIOMETRIE-GESTÜTZTE OBJEKTBINDUNG**

BIOMETRY-SUPPORTED OBJECT BINDING

LIAISON D'OBJETS ASSISTÉE PAR LA BIOMÉTRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2017 DE 102017106855**

(43) Veröffentlichungstag der Anmeldung:
**05.02.2020 Patentblatt 2020/06**

(73) Patentinhaber: **Bundesrepublik Deutschland, vertreten durch das Bundesministerium des Innern, Vertreten durch das Bundesamt für Sicherheit 53175 Bonn (DE)**

(72) Erfinder:
• **KORTE, Ulrike**
  **59387 Ascheberg (DE)**
• **THENÉE, Nicolas**
  **53347 Alfter (DE)**
• **ULLMANN, Markus**
  **53489 Sinzig (DE)**

(74) Vertreter: **Valvoda, Jakob**
**Boehmert & Boehmert**
**Anwaltspartnerschaft mbB**
**Pettenkoferstrasse 22**
**80336 München (DE)**

(56) Entgegenhaltungen:
WO-A1-00/51244      WO-A1-2007/113888
US-A1- 2016 164 682   US-A1- 2017 063 559

# EP 3 602 958 B1

**Beschreibung**

TECHNISCHES GEBIET

Die vorliegende Erfindung betrifft ein Verfahren zum Bereitstellen einer Biometrie-gestützten Objektbindung an ein Individuum sowie ein Verfahren zum Verifizieren einer Biometrie-gestützten Objektbindung. Ferner sind entsprechende Vorrichtungen und ein System definiert. Die vorliegende Erfindung kann ferner eine Biometrie-gestützte Objektbindung an ein Individuum, basierend auf einer Verknüpfung eines Objekts mit einem gesicherten Abbild einer algebraischen Instanz und mit eine biometrische Verifikation unterstützenden Daten (Verifikationsdaten), betreffen.

STAND DER TECHNIK

Die Nutzung und Auswertung von Objekten durch einzelne Individuen für beliebige Aufgaben und Zwecke stellt einen alltäglichen Vorgang dar. Hierbei kann es von Interesse sein, dass die Objekte einzelnen Individuen zugeordnet sind, um so beispielsweise eine Berechtigung zur Nutzung zum Ausdruck zu bringen. Beispielsweise kann durch eine Adressierung einer Nachricht an einen Adressaten eine Zugehörigkeit des Adressaten zu der Nachricht zum Ausdruck gebracht werden, woraus eine Berechtigung des Adressaten zur Entgegennahme der Nachricht abgeleitet werden kann. Aus der Adresse allein kann jedoch nicht darauf geschlossen werden, dass ein Empfänger tatsächlich der Adressat ist. Der Empfänger muss vielmehr einen Nachweis seiner Identität vorlegen. Ein Angreifer, der im Besitz des Nachweises ist, kann somit vorgeben, dass die Nachricht ihm zugeordnet ist, und entsprechend unberechtigt auf die Nachricht zugreifen.

In weiteren Ansätzen werden Objekte für einen Adressaten verschlüsselt oder mit kryptographisch gesicherten Informationen versehen. Ein Empfänger kann nur dann auf ein Objekt zugreifen, wenn er ein passendes Geheimnis oder ein Passwort weiß oder im Besitz eines geeigneten Schlüssels oder eines geeigneten Nachweises ist, dass er der Adressat ist. Diese Ansätze erfordern jedoch, dass in vorgelagerten Schritten diese vertraulichen Informationen zwischen Sender und Empfänger ausgetauscht werden, damit der Empfänger das Objekt geeignet verarbeiten kann.

Biometrische Erkennungsverfahren stellen gängige Verfahren dar, welche eine direkte oder indirekte Bestimmung von Identitäten einzelner Personen ermöglichen. Hierzu werden biologische Charakteristika einer Person erhoben und mit einem abgelegten Profil verglichen. Bei der Verifikation stellen neben Wissen, beispielsweise eines Geheimnisses oder Passworts, und Besitz, beispielsweise eines Sicherheits-Tokens mit kryptographischen Schlüsseln, die so gewonnenen biometrischen Merkmale eine dritte Klasse dar, auf Basis derer Personen authentifiziert werden können. In der Biometrie werden statische Merkmale (beispielsweise Finger, Gesicht, Iris, Venen usw.) und dynamische Merkmale (beispielsweise Tippverhalten) unterschieden. Um eine Person anhand ihrer biometrischen Informationen erkennen zu können, muss zunächst in einer Enrolment-Phase die biometrische Information sensorisch erfasst und daraus mittels Merkmalsextraktoren eine biometrische Referenz dieser Person ermittelt werden, die dann nach weiteren Verarbeitungsschritten als ein biometrisches Referenzmerkmal gespeichert wird. Im Rahmen einer Verifikation werden erneut biometrische Merkmale erfasst und mit den hinterlegten Referenzmerkmalen verglichen.

Die sensorische Erfassung und Digitalisierung biometrischer Merkmale geht mit systematischen Fehlerquellen einher, welche beispielsweise unterschiedliche Ausrichtungen von Sensoren und der zu erfassenden Merkmale im Rahmen des Enrolments und bei der Verifikation, Ungenauigkeiten der biometrischen Erfassungssensoren, Quantisierungsfehler bei der Digitalisierung der Sensorinformationen und Ähnliche betreffen können. Diese Fehlerquellen müssen beim Vergleich der Referenzmerkmale und der erfassten Merkmale der zu verifizierenden Personen berücksichtigt werden. Auch wenn typischerweise ein unscharfes Übereinstimmungsmaß verwendet werden kann, können aus diesen Gründen biometrische Merkmale für die Verifikation nicht einwegverschlüsselt werden, wie es beispielsweise bei einer Verifikation mittels Passwörtern gemacht werden kann.

Vielmehr werden biometrische Merkmale im Klartext als sogenannte Templates abgelegt. Auch wenn die Templates zunächst verschlüsselt vorliegen können, müssen sie zur Verifikation wieder im Klartext vorliegen, sodass ein Angreifer auf diese Daten zugreifen und diese im Rahmen einer nachfolgenden Verifikation missbrauchen könnte. Entsprechend erfordert eine Verifikation mit biometrischen Merkmalen zumindest eine vertrauenswürdige Infrastruktur, in der die biometrischen Referenzmerkmale abgelegt und vor dem Zugriff Dritter geschützt sind.

US 2016/164682 A1 offenbart einen Ansatz für eine biometrische Authentifizierung, welche die Privatsphäre wahrt. Hierzu wird zunächst ein Satz von Registrierungsmerkmalen aus einer biometrischen Messung gewonnen. Nachfolgend werden Codewörter eines Error Correction Code ausgewählt, um verschleierte Registrierungsdaten zu gewinnen, welche die ursprünglichen Registrierungsmerkmale charakterisieren. Ferner werden verschleierte Codewörter bestimmt, welche eine verschleierte Version der ursprünglichen Codewörter definieren, unter Verwendung eines zufälligen Registrierungspolynoms. Aus den verschleierten Registrierungsdaten wird ein biometrisches Template erstellt. Da sowohl die Codewörter als auch das zufällige Registrierungspolynom geheim gehalten werden, können keine Rückschlüsse auf die biometrischen Daten gewonnen werden.

WO 0000/051244 A1 geht auf Techniken aus den Bereichen der Fehlerkorrekturcodes und der Kryptographie ein und kombiniert diese, um ein kryptographisches Primitiv zu definieren, welches als Fuzzy-Commitment-Schema bezeichnet wird. Das Schema umfasst die Verwendung einer Dekodierfunktion, um ein Eingabemuster auf ein erstes Codewort abzubilden, das aus einer Vielzahl von Codewörtern ausgewählt wird, die einem fehlerkorrigierenden Code zugeordnet sind. Ein Offsets zwischen dem Eingabemuster und dem ersten Codewort wird berechnet und das erste Codewort wird gehasht. Der Hash des ersten Codeworts bildet in Verbindung mit dem Offset ein Fuzzy Commitment.

US 2017/063559 A1 offenbart eine Vorrichtung mit einer physikalischen nicht klonbaren Funktion (PUF) und einer Schwellenwertkryptographie.

WO 2007/113888 A1 geht auf die Erzeugung und Verifikation von Sicherheitsinformationen ein, welche durch biometrische Messungen erhalten werden. Solche Sicherheitsinformationen können einer Entität, beispielsweise einer Person, zugeordnet werden.

ZUSAMMENFASSUNG

Eine Aufgabe der vorliegenden Erfindung besteht darin, eine Zuordnung von Objekten zu einzelnen Individuen zu ermöglichen, welche weder Besitz noch Kenntnis eines vorab getauschten oder festgelegten Geheimnisses erfordert.

Die vorliegende Erfindung löst zudem die Aufgabe, eine sichere Verifikation eines zugeordneten Individuums auf der Grundlage von biometrischen Merkmalen bereitzustellen, welche keine Entschlüsselung von Referenzmerkmalen im Klartext erfordert.

Die Aufgabe wird durch ein Verfahren zum Bereitstellen einer Biometrie-gestützten Objektbindung nach dem Anspruch 1 und ein Verfahren zum Verifizieren einer Biometrie-gestützten Objektbindung nach dem Anspruch 12 sowie durch entsprechende Vorrichtungen nach den Ansprüchen 10 und 14 gelöst. Bevorzugte Ausführungsformen sind in den abhängigen Ansprüchen definiert.

Erfindungsgemäß ist ein Verfahren zum Bereitstellen einer Biometrie-gestützten Objektbindung angegeben, das ein Zugreifen auf biometrische Merkmale eines Individuums, ein zufälliges Wählen einer algebraischen Instanz, ein Erzeugen eines gesicherten Abbilds der algebraischen Instanz, ein Berechnen von Verifikationsdaten basierend auf den biometrischen Merkmalen und der algebraischen Instanz und ein Verknüpfen eines Objekts mit dem gesicherten Abbild der algebraischen Instanz und den Verifikationsdaten umfasst, um das Objekt an das Individuum zu binden.

Das Verfahren kann vorzugsweise zum Bereitstellen einer Biometrie-gestützten Objektbindung an ein Individuum vorgesehen sein, wobei das Zugreifen ein einfaches oder ein mehrfaches Zugreifen auf die biometrischen Merkmale und/oder ein Erzeugen eines biometrischen Templates des Individuums umfassen kann. Die algebraische Instanz kann verwendet werden, um ein geschütztes biometrisches Referenzmerkmal zu erzeugen. Das gesicherte Abbild kann kryptographisch oder durch Transformation gesichert sein. Die Verifikationsdaten können durch Einbetten der biometrischen Merkmale in die algebraische Instanz oder durch eine Verarbeitung der biometrischen Merkmale mit der algebraischen Instanz berechnet werden.

Das Objekt wird daher mit Informationen verknüpft, welche aus biometrischen Merkmalen des Individuums gewonnen werden, an das das Objekt gebunden werden soll. Die algebraische Instanz wird verwendet, um aus den biometrischen Merkmalen die Verifikationsdaten zu berechnen. Ferner wird die algebraische Instanz in gesicherter Form, als das gesicherte Abbild der algebraischen Instanz, mit dem Objekt verknüpft. Entsprechend ist das Objekt mit allen erforderlichen Informationen verknüpft, um eine biometrische Verifikation des mit dem Objekt verknüpften Individuums zu ermöglichen, ohne dass biometrische Referenzmerkmale des Individuums in Klartext vorliegen müssten oder aus den mit dem Objekt verknüpften Informationen extrahiert oder gewonnen werden könnten. Ein Angreifer hat somit keinen Zugriff auf die biometrischen (Referenz-)Merkmale, wodurch Missbrauch effektiv verhindert werden kann. Ferner kann die Verifikation ohne einen vorhergehenden Austausch oder Festlegung von Geheimnissen erfolgen. Es genügt, dass im Rahmen der Verifikation biometrische Referenzmerkmale als gesichertes Abbild der algebraischen Instanz und als Verifikationsdaten einmalig vorliegen und lediglich biometrische Live-Informationen zur Erkennung eines berechtigten Individuums vorgelegt werden.

Die biometrischen Merkmale können beliebige biometrische Charakteristika von Individuen erfassen. Als ein Individuum wird in der vorliegenden Beschreibung eine beliebige individuelle Entität verstanden, welche eine Person, ein Tier, ein Humanoide, ein Roboter, eine individualisierbare elektronische Vorrichtung oder ein elektronisches System, beispielsweise ein vernetztes System, sein kann. Die Erfindung ist jedoch nicht auf eine Form und Art einer Entität beschränkt, sofern die Entität in der Lage ist, individualisierende Charakteristika bereitzustellen.

Biometrische Merkmale können statische Merkmale, wie beispielsweise eine Form oder Ausgestaltung eines Fingers, eines Gesichts, einer Iris, der Handgeometrie, der Retina, von Venen, der DNA oder ähnliche Charakteristika einer Person oder eines Tieres, oder dynamische Merkmale aufweisen, beispielsweise ein Interaktionsverhalten einer Person oder eines Tieres mit einer Vorrichtung, beispielsweise Tippverhalten, Unterschrift, Gang, Stimme usw. Ferner können physikalisch-biometrische Merkmale auch aus einem individuellen elektronischen Aufbau einer Vorrichtung, eines Humanoiden, eines Roboters oder eines Systems gewonnen werden, beispielsweise aus intrinsischen Charakteristiken von elektronischen Schaltkreisen, aus einer "Physical Unclonable Function" (PUF) einer physikalischen Entität oder aus einer Dynamik eines vernetzten Systems, welche als physikalisch-biometrische Merkmale einer (teil-)elektronischen Vorrichtung aufgefasst werden können, deren Zugehörigkeit zu dem gebundenen Objekt verifiziert werden soll.

Die zum Berechnen der Verifikationsdaten verwendete algebraische Instanz wird zufällig gewählt. Entsprechend ist keine festgelegte Funktion zur weiteren Verarbeitung der biometrischen Merkmale vorgesehen, wodurch es für einen Angreifer geradezu unmöglich ist, aus den mit dem Objekt verknüpften Verifikationsdaten auf die biometrischen Merkmale zu schließen.

Die algebraische Instanz definiert ein biometrisches Verfahren oder System auf Basis eines algebraischen Algorithmus, mit dem biometrische Merkmale eingebettet oder verknüpft werden können, um Verifikationsdaten zu berechnen. Das Verfahren oder System kann ein Kryptoverfahren oder ein Transformationsverfahren und/oder ein entsprechendes System sein. Die algebraische Instanz, wie sie im Kontext dieser Beschreibung definiert ist, kann somit als ein biometrisches Kryptoverfahren und/oder -system oder als ein Transformationsverfahren und/oder -system auf Basis eines algebraischen Algorithmus definiert sein. Vorzugsweise stellt der algebraische Algorithmus ein schweres zahlentheoretisches Problem dar, sodass aus den verarbeiteten Daten keine Rückschlüsse auf die ursprünglich erhobenen biometrischen Merkmale des Individuums oder die wahre Identität des Individuums gezogen werden können. Diese Eigenschaft der algebraischen Instanz kann als Einwegeigenschaft bezeichnet werden. Ferner kann der algebraische Algorithmus über Möglichkeiten zur Generierung mehrerer voneinander unabhängiger Verifikationsdaten auf Basis derselben oder sehr ähnlicher biometrischer Merkmale für ein und dasselbe Individuum (innerhalb einer Anwendung) verfügen, mit dem Ziel der Erneuerung biometrisch gestützter Identitätsnachweise. Diese Eigenschaft kann als Diversifikationseigenschaft bezeichnet werden. Ferner kann der algebraische Algorithmus derart ausgestaltet sein, dass keine Erstellung von Querbezügen zwischen den geschützten biometrischen Merkmalen, beispielsweise aus einem Template, in verschiedenen Anwendungen bzw. Kontexten ermöglicht wird. Diese Eigenschaft kann als Korrelationsresistenzeigenschaft bezeichnet werden. Der algebraische Algorithmus kann ferner fehlertolerant sein und daher derart ausgestaltet sein, dass er eine Überprüfung ermöglicht, ob ein zur Verifikation erfasstes biometrisches Merkmal ähnlich genug ist zu dem ursprünglich erhobenen biometrischen Merkmal des Individuums. Diese Eigenschaft kann als Fehlertoleranzeigenschaft bezeichnet werden.

Die Eigenschaften können beliebig kombinierbar sein und eine oder mehrere Eigenschaften können bei einer algebraischen Instanz gar nicht oder in unterschiedlichen Graden realisiert sein, sodass die vorliegende Erfindung nicht auf algebraische Instanzen mit allen Eigenschaften beschränkt ist. Gegenüber einer Einwegfunktion kann sich eine algebraische Instanz beispielsweise dadurch abgrenzen, dass sie zusätzlich über die Diversifikationseigenschaft, die Korrelationsresistenzeigenschaft und die Fehlertoleranzeigenschaft verfügt.

In einer bevorzugten Ausführungsform weist die algebraische Instanz ein biometrisches Kryptoverfahren auf, das auf einem algebraischen Algorithmus basiert, der ein schweres zahlentheoretisches Problem darstellt.

Vorzugsweise kann die algebraische Instanz eine fehlerkorrigierende algebraische Instanz sein. Eine fehlerkorrigierende algebraische Instanz kann einen fehlerkorrigierenden Algorithmus aufweisen, der im Rahmen einer Verarbeitung der biometrischen Merkmale bereits eine Toleranz hinsichtlich möglicher Fehlerquellen bei der Gewinnung und Verarbeitung von biometrischen Merkmalen verwirklichen kann.

Das gesicherte Abbild der algebraischen Instanz bildet die algebraische Instanz zwar ab, ermöglicht jedoch vorzugsweise keine Rückschlüsse auf die verwendete algebraische Instanz. Vorzugsweise ist die algebraische Instanz kryptographisch oder durch Transformation gesichert. Das gesicherte Abbild kann beispielsweise auf einer Einwegverschlüsselung der algebraischen Instanz (beispielsweise ein Hash-Wert ihrer Parameter), auf einer mathematischen Transformationsberechnung oder Verschlüsselung der algebraischen Instanz oder ihrer Parameter oder auf dem Einsatz eines geheimen Schlüssels basieren, sodass die algebraische Instanz aus dem gesicherten Abbild nicht oder nur mit einem unverhältnismäßig hohen Aufwand wiedergewonnen werden kann. Ferner kann das gesicherte Abbild auf einer Einwegverschlüsselung eines biometrischen (Referenz-)Merkmals oder einer mathematischen Transformationsberechnung oder -verschlüsselung des biometrischen Merkmals basieren.

Die Verifikationsdaten können durch Einbetten der biometrischen Merkmale in die algebraische Instanz oder durch Verarbeitung der biometrischen Merkmale mit der algebraischen Instanz berechnet werden. Die Verifikationsdaten können auf den biometrischen (Referenz-)Merkmalen des Individuums basieren und unterstützen die nachgelagerte biometrische Verifikation des Individuums. Vorzugsweise können die biometrischen Merkmale mittels einer fehlerkorrigierenden algebraischen Instanz verarbeitet werden, sodass der Verifikationsalgorithmus mögliche Toleranzen zulässt. Diese können als ein unscharfes Übereinstimmungsmaß für die biometrische Verifikation aufgefasst werden. Fehlertoleranz kann beispielsweise durch den Einsatz von fehlerkorrigierenden Codes, beispielsweise von Polynomial Codes, z. B. Reed-Solomon-Code, oder Non Binary Cyclic Codes, erreicht werden.

Auf die Kombination aus einer algebraischen Instanz und den dazugehörigen Verifikationsdaten kann in dieser Beschreibung auch als ein geschütztes biometrisches Template Bezug genommen werden. Das Objekt wird sowohl mit den Verifikationsdaten als auch mit dem gesicherten Abbild der algebraischen Instanz verknüpft, welche zur nachfolgenden Verifikation der Objektbindung herangezogen werden können. Das Objekt wird somit mit Informationen verknüpft, welche eine auf Biometrie gestützte Verifikation eines Zielindividuums ermöglichen, welche keine Betrachtung von ursprünglich gewonnenen biometrischen Merkmalen in Klartext erfordert, sodass eine einfache, sichere und effiziente Bindung des Objekts an das Zielindividuum erfolgen kann.

In einer bevorzugten Ausführungsform basiert die algebraische Instanz auf einem Polynom $f(x) = m_{k-1}x^{k-1} + m_{(k-2)}x^{k-2} + \cdots + m_0$ vom Grad k-1 über einem endlichen Körper $F(p)$, wobei die Verifikationsdaten aus Koeffizienten eines linearen Gleichungssystems mit in das Polynom eingesetzten Werten der biometrischen Merkmale berechnet werden. Das Polynom $f(x)$ kann in der Enrolment-Phase zufällig gewählt werden. Dabei können die Koeffizienten $m_0, ..., m_{(k-1)}$ Elemente des endlichen Körpers $F(p)$ sein und eine geheime Zeichenkette darstellen, die bei einer Verifikation des Individuums wieder rekonstruiert werden muss. Die biometrischen Merkmale werden zunächst auf eine Zahl $x_i$ im endlichen Körper $F(p)$ abgebildet und dann als $x_i$ in das Polynom $f(x)$ eingesetzt, wodurch passende y-Werte $y_i = f(x_i)$ berechnet werden können. Zur Ermittlung der Verifikationsdaten kann ein zweites monisches Polynom

$$p'(x) = x^n + \sum_{j=0}^{n-1} \beta_j x^j$$ vom Grad $n$ und zunächst unbekannten Koeffizienten $\beta_j$, $0 \leq j \leq n$ - 1, definiert werden.

Die Koeffizienten $\beta_j$ können bestimmt werden, indem ein lineares Gleichungssystem der Form $y_i = p'(x_i)$ gelöst wird. Die Koeffizienten $\beta_j$ können die (öffentlichen) Verifikationsdaten darstellen. Die algebraische Instanz wird (kryptographisch) gesichert, indem die Koeffizienten des Polynoms $f(x)$ konkateniert und gehasht werden. Beispielsweise kann das gesicherte Abbild als ein Hash-Wert $h(m_{(k-1)}\|m_{(k-2)}\|...\|m_0)$ der konkatenierten Koeffizienten $m_i$ von $f(x)$ definiert sein.

In einer weiteren Ausführungsform umfasst das Verfahren ein Erfassen der biometrischen Merkmale des Individuums, wobei das Erfassen ein Erfassen von biometrischen Informationen des Individuums, ein Ausrichten und Quantisieren der biometrischen Informationen und ein Extrahieren und Transformieren der biometrischen Merkmale auf der Grundlage der quantisierten biometrischen Informationen umfasst. Diese Schritte können insbesondere dann erforderlich sein, wenn ein Individuum noch nicht biometrisch erfasst ist und daher keine Referenzmerkmale vorliegen. Für bereits erfasste Individuen kann auf vorab gewonnene und gespeicherte biometrische (Referenz-)Merkmale zugegriffen werden. Hierbei kann geprüft werden, ob die Referenzmerkmale mit einer ausreichend hohen Qualität vorliegen. Unterschreitet die Qualität ein bestimmtes Niveau, können die biometrischen Merkmale neu erfasst werden. Es sollte jedoch verständlich sein, dass alternativ oder zusätzlich bei jeder erneuten Objektbindung die biometrischen Merkmale erneut erfasst werden können, beispielsweise dann, wenn das Individuum ohnehin für eine Erfassung zur Verfügung steht. Die biometrischen Informationen können mit einem beliebigen geeigneten Scanner erfasst werden, beispielsweise mit einem Fingerabdrucklesegerät, einem Venenbildscanner, einem Irisscanner oder einem Erfassungsgerät für weitere biometrische Informationen. Weitere Lesevorrichtungen, Sensoren und Scanner können verwendet werden, um statische und/oder dynamische biometrische Charakteristika des Individuums zu erfassen. Die biometrischen Informationen können ausgerichtet (Alignment) und skaliert werden. Aus den biometrischen Informationen können zur Erkennung des Individuums ausgewiesene Merkmale extrahiert werden, welche ein ausreichend hohes Qualitätsniveau haben. Ferner können die derart verarbeiteten biometrischen Informationen auf der Grundlage eines gewählten Quantisierungssystems und von gewählten Quantisierungsparametern verarbeitet werden. Es sollte verständlich sein, dass unterschiedliche biometrische Merkmale bei ihrer Erfassung einer abweichenden oder derselben Verarbeitung unterzogen werden können, welche eine Teilmenge der einzelnen Ausrichtungs-, Extraktions- und Quantisierungsschritte in beliebiger Kombination oder weitere Bearbeitungsschritte aufweisen kann, um qualitativ hochwertige ausgewiesene Merkmale der biometrischen Charakteristiken zu gewinnen.

In einer weiteren Ausführungsform werden die biometrischen Merkmale des Individuums nicht erfasst, sondern sind bereits in einer Datenbank abgelegt, und das Zugreifen auf die biometrischen Merkmale weist ein Abrufen der biometrischen Merkmale aus der Datenbank auf. Die Datenbank kann eine abgesicherte Datenbank sein und für autorisierte Benutzer einen sicheren Zugriff auf die biometrischen Merkmale bereitstellen. Die Datenbank kann in einer Netzwerkumgebung oder einer Cloud bereitgestellt sein und im Fall einer ausreichenden Autorisierung über entsprechend abgesicherte Kommunikationskanäle ansprechbar sein. Die Datenbank kann ferner in einer lokalen Rechenumgebung vorgesehen und auf einer Recheneinheit implementiert sein, welche sich von einer Recheneinheit unterscheidet, die die Biometrie-gestützte Objektbindung gemäß Ausführungsformen der vorliegenden Erfindung bereitstellt. Die Datenbank kann jedoch auch lokal auf derselben Recheneinheit bereitgestellt sein, die die Biometrie-gestützte Objektbindung durchführt. Darüber hinaus kann ein hybrides Speichermodell vorgesehen sein, welches die geschützten biometrischen Referenzmerkmale und die Verifikationsdaten separiert. Hierbei können die Verifikationsdaten auf dem Objekt und die geschützten biometrischen Referenzmerkmale in einer entfernten (nicht lokalen) Datenbank gespeichert sein. Die Bereitstellung und der sichere Betrieb der Datenbank kann auch von einem vertrauenswürdigen Dritten als Dienstleistung erbracht werden.

In einer weiteren Ausführungsform basiert das Berechnen der Verifikationsdaten auf Verfahrensparametern. Die Verfahrensparameter können zusätzlich mit dem Objekt verknüpft werden. Entsprechend kann das Verknüpfen ein Verknüpfen des Objekts mit dem gesicherten Abbild, den Verifikationsdaten und den Verfahrensparametern aufweisen. Vorzugsweise basiert das Erzeugen des gesicherten Abbilds der algebraischen Instanz und/oder das Berechnen der Verifikationsdaten zumindest auf einem Teil der Verfahrensparameter. Die Verfahrensparameter können eine biometrische Modalität, ein Alignment-System, einen Feature-Deskriptor, ein Quantisierungssystem und -parameter, einen Polynomgrad, einen Primkörper, einen Domainparametersatz, ein Signaturverfahren und weitere beliebige Parameter und Algorithmen in beliebiger Zahl und Kombination aufweisen und/oder betreffen.

Gemäß einer Ausführungsform umfasst das Verfahren ferner ein Erzeugen mindestens eines Authentizitätsmerkmals des gesicherten Abbilds und/oder der Verifikationsdaten und/oder der Verfahrensparameter, wobei das Objekt mit dem mindestens einen Authentizitätsmerkmal verknüpft wird. Somit umfasst das Verfahren ein Verknüpfen des Objekts mit dem gesicherten Abbild der algebraischen Instanz und den Verifikationsdaten (und vorzugsweise mit den Verfahrensparametern) sowie mit dem mindestens einen Authentizitätsmerkmal. Das mindestens eine Authentizitätsmerkmal kann über mindestens einen Teil der mit dem Objekt verknüpften Daten (oder über alle Daten) erzeugt werden. Das Authentizitätsmerkmal kann beliebige Daten aufweisen, welche eine Überprüfung der mit dem Objekt verknüpften Daten ermöglichen. Beispielsweise kann das Authentizitätsmerkmal ein kryptographisch gesichertes Authentizitätsmerkmal, z. B. eine kryptographische Signatur, aufweisen.

In einer weiteren Ausführungsform umfasst das Verfahren ferner ein Speichern eines öffentlichen Schlüssels und/oder eines Zertifikats zur Prüfung des mindestens einen Authentizitätsmerkmals. Die Biometrie-gestützte Bindung des Objekts an das Individuum kann somit auf mehreren Ebenen kryptographisch abgesichert sein: Der Schlüssel oder das Zertifikat können zur Überprüfung eines mit dem Objekt verknüpften Authentizitätsmerkmals verwendet werden, welches dann zur Überprüfung der weiteren mit dem Objekt verknüpften Daten herangezogen werden kann, die schließlich für die Biometrie-gestützte Verifikation verwendet werden. Zusätzlich kann eine Sperrung des Zertifikats durch eine Zertifizierungsstelle als ein Widerruf des gesicherten Abbilds der algebraischen Instanz und/oder als ein Widerruf der Bindung des Objekts an das Individuum angesehen werden. Entsprechend kann die Verifikation ein Prüfen des Zertifikats und ein Ablehnen der Objektbindung umfassen, falls das Zertifikat gesperrt ist oder widerrufen wurde. Keines dieser Sicherheitsmerkmale erfordert jedoch einen Vorabaustausch von Geheimnissen bei der Bereitstellung der Objektbindung oder der Verifikation, sodass die Biometrie-gestützte Objektbindung durch eine einzelne Entität bereitgestellt werden kann, wobei die Entität lediglich Zugriff auf biometrische (Referenz-)Merkmale des Zielindividuums haben muss. Die nachfolgende Verifikation der Biometrie-gestützten Objektbindung durch eine weitere Entität erfordert ebenfalls keinen Vorabaustausch von Geheimnissen.

In einer weiteren Ausführungsform ist das Objekt ein physisches Objekt und das Verknüpfen umfasst ein Versehen des Objekts mit einer Kennung, die zumindest Informationen aufweist, die zumindest das gesicherte Abbild und die Verifikationsdaten repräsentieren. Das physische Objekt kann ein beliebiges Objekt sein, welches an einen Adressaten, Empfänger oder Berechtigten gerichtet sein kann, mit dem das Objekt verknüpft wird. Das Objekt kann z. B. ein Arbeitsmittel, ein hoheitliches Dokument, ein Pass oder ein Ausweis, ein Zahlungsmittel, beispielsweise eine Kreditkarte oder eine Zahlungskarte, ein Identifikationsmittel oder Ähnliches sein, dessen Bindung an das Individuum bei Verwendung oder Zugriff über biometrische Merkmale überprüfbar ist.

Vorzugsweise kann das Versehen des Objekts mit der Kennung ein Aufbringen eines Trägers mit den Informationen auf oder in dem Objekt oder ein Ändern einer Struktur des Objekts basierend auf den Informationen umfassen. Die Kennung mit den erforderlichen Informationen kann auf einem Träger aufgebracht sein, der die Kennung optisch oder elektromagnetisch repräsentiert und der auf eine Oberfläche, eine Innenfläche oder an eine beliebige Stelle innerhalb des Objekts auf- oder eingebracht werden kann. Beispielsweise kann ein (zweidimensionaler) Träger auf das Objekt aufgeklebt oder ein (dreidimensionaler) Träger in das Objekt eingeführt werden. Ferner kann das Objekt selbst derart modifiziert werden, dass die Kennung selbst durch eine Änderung der Struktur des Objekts dargestellt wird. So kann die Kennung beispielsweise direkt auf das Objekt oder in eine Oberfläche des Objekts geprägt, geätzt, graviert oder anderweitig durch Änderung der Struktur des Objekts mit dem Objekt verknüpft werden. Die Informationen der Kennung können mit einem geeigneten Lesegerät extrahiert werden, beispielsweise einem optischen Scanner, einem akustischen Scanner oder einem elektromagnetischen Scanner. Gemäß einem Beispiel kann der Träger ein Aufkleber sein, der eine Codierung der Informationen der Kennung aufweist und von einem optischen Lesegerät ausgelesen werden kann. Beispielsweise kann die Kennung ein Barcode sein, z. B. ein 2D-Barcode oder ein QR-Code. Darüber hinaus kann der Träger ein Chip, beispielsweise ein RFID-Chip sein, der in oder auf das Objekt ein- bzw. aufgebracht sein kann und mit einem geeigneten Lesegerät ausgelesen werden kann. Es sollte jedoch verständlich sein, dass die vorliegende Erfindung nicht auf eine bestimmte Kennzeichnung des Objekts beschränkt ist und vielmehr jede Art einer Verknüpfung des Objekts mit dem gesicherten Abbild und den Verifikationsdaten verwendet werden kann, beispielsweise eine Verwendung eines beliebigen Trägers von Informationen oder eine beliebige chemische oder physikalische Veränderung der Struktur des Objekts.

In einer bevorzugten Ausführungsform ist das Objekt ein digitales Objekt, das mit Informationen verknüpft wird, die zumindest das gesicherte Abbild und die Verifikationsdaten repräsentieren. Das digitale Objekt kann ein beliebiges in einer elektronischen Recheneinheit verarbeitetes oder über ein elektronisches Übertragungsmedium übertragenes digitales Objekt sein, beispielsweise Nachrichten, Mediendaten, elektronische Identitätsnachweise, elektronische Zahlungsmittel oder elektronische hoheitliche Dokumente oder Ähnliches. Die Informationen können derart mit dem digitalen Objekt verknüpft sein, dass eine Trennung der Informationen von dem digitalen Objekt zu einem ungültigen Objekt führen kann. Beispielsweise können die Authentizitätsmerkmale zumindest teilweise über einem Teil des digitalen Objekts berechnet werden und ein Zugriff oder eine Verwendung des digitalen Objekts kann eine darauf basierende erfolgreiche Verifikation des Objekts und der verknüpften Daten erfordern.

In einer weiteren Ausführungsform weisen die Informationen, die zumindest das gesicherte Abbild der algebraischen Instanz und die Verifikationsdaten repräsentieren, eine Referenz-ID auf. Die Referenz-ID kann eine eindeutige Referenz-ID sein, welche verwendet werden kann, um zumindest teilweise das gesicherte Abbild der algebraischen Instanz und die Verifikationsdaten aus einer Quelle abzurufen, beispielsweise aus einer Datenbank oder einem Netzwerk-Storage. Die Referenz-ID kann eine festgelegte Größe aufweisen und deshalb auch auf einem Informationsträger aufgebracht sein, der nur eine beschränkte Größe aufweist. Die Referenz-ID kann als ein Barcode oder in einer beliebigen anderen Codierung oder Repräsentation optisch oder elektromagnetisch auf oder in dem Objekt vorgesehen sein.

Gemäß einem weiteren Aspekt der vorliegenden Erfindung ist ein Biometrie-gestützt an ein Individuum gebundener Gegenstand definiert, der mit einem Verfahren nach einer Ausführungsform eines Aspekts der vorliegenden Erfindung erzeugt ist. Der Gegenstand kann ein physisches oder ein digitales Objekt sein, das an ein Individuum gebunden ist, sodass ein Empfänger oder Besitzer bei Zugriff oder Verwendung des Gegenstands biometrisch authentifiziert werden kann und somit eine Berechtigung zum Besitz oder Zugriff auf den Gegenstand biometrisch überprüfbar ist.

Gemäß einem weiteren Aspekt der vorliegenden Erfindung ist eine Vorrichtung definiert, die eingerichtet ist, das Verfahren nach einer Ausführungsform der vorliegenden Erfindung durchzuführen. Die Vorrichtung kann mindestens einen Prozessor und einen Speicher mit computerausführbaren Befehlen aufweisen, welche bei Ausführung durch den mindestens einen Prozessor die Vorrichtung einrichten, das Verfahren nach einer Ausführungsform auszuführen. Beispielsweise kann die Vorrichtung eingerichtet sein, elektronische oder physische Objekte Biometrie-gestützt an ein Individuum zu binden und derart gebundene Objekte bereitzustellen. In einer Ausführungsform kann die Vorrichtung eingerichtet sein, auf biometrische Merkmale eines Individuums zuzugreifen, eine algebraische Instanz zufällig zu wählen, ein gesichertes Abbild der algebraischen Instanz zu erzeugen, Verifikationsdaten basierend auf den biometrischen Merkmalen und der algebraischen Instanz zu berechnen und ein Objekt mit dem gesicherten Abbild der algebraischen Instanz und den Verifikationsdaten zu verknüpfen, um das Objekt an das Individuum zu binden.

In einer Ausführungsform umfasst die Vorrichtung einen Drucker, der das Objekt mit einer Kennung versieht, die Informationen aufweist, die das gesicherte Abbild der algebraischen Instanz und die Verifikationsdaten repräsentieren. Der Drucker kann eingerichtet sein, einen Träger mit den zugehörigen Informationen zu versehen und auf eine Oberfläche des Objekts aufzutragen oder in das Objekt einzuführen. Alternativ oder zusätzlich kann der Drucker eingerichtet sein, die Struktur des Objekts derart zu ändern, dass die Informationen auf oder in der geänderten Struktur des Objekts repräsentiert sind. So kann beispielsweise der Drucker die Informationen direkt auf eine Oberfläche des Objekts aufdrucken, in die Struktur des Objekts chemisch einbringen oder anderweitig physikalisch die Struktur des Objekts modifizieren, um die Informationen mit dem Objekt zu verknüpfen. Die Kennung kann optisch oder elektromagnetisch durch ein geeignetes Lesegerät auslesbar sein.

Gemäß einem weiteren Aspekt der vorliegenden Erfindung ist ein Verfahren zum Verifizieren einer Biometrie-gestützten Objektbindung definiert, das ein Erhalten eines Objekts, das zumindest mit einem gesicherten Abbild einer ersten algebraischen Instanz und mit Verifikationsdaten verknüpft ist, wobei die Verifikationsdaten basierend auf biometrischen Merkmalen und der ersten algebraischen Instanz berechnet sind, ein Erfassen mindestens eines biometrischen Merkmals eines Individuums, ein Rekonstruieren einer zweiten algebraischen Instanz aus dem erfassten mindestens einen biometrischen Merkmal und den Verifikationsdaten, ein Erzeugen eines gesicherten Abbilds der zweiten algebraischen Instanz und ein Vergleichen des gesicherten Abbilds der ersten algebraischen Instanz mit dem gesicherten Abbild der zweiten algebraischen Instanz umfasst.

Das Objekt kann ein nach einer Ausführungsform der vorliegenden Erfindung erzeugtes, an das Individuum Biometrie-gestützt gebundenes Objekt sein. Die erfassten biometrischen Merkmale und die Verifikationsdaten werden verwendet, um die zweite algebraische Instanz zu rekonstruieren, welche dann entsprechend zu der ersten algebraischen Instanz gesichert wird, beispielsweise mittels einer Einwegfunktion, sodass beide gesicherten Abbilder miteinander vergleichbar sind und anhand einer Übereinstimmung die Feststellung erlauben, ob das Objekt an das Individuum gebunden ist.

Erfindungsgemäß ist somit ein Verifikationsverfahren angegeben, das auf biometrischen Charakteristiken des Individuums beruht, und daher besonders einfach anwendbar ist, da es keinen Vorabaustausch von Geheimnissen oder Schlüsseln erfordert. Die zur biometrischen Verifikation erforderlichen Daten, die mit dem Objekt verknüpft sind, können jedoch von einem Angreifer nicht derart ausgelesen werden, dass er einen direkten Zugriff auf die biometrischen Merkmale des Individuums erlangen kann. Somit stellt das Verifikationsverfahren für einen Empfänger ein einfach nutzbares, jedoch besonders sicheres Verfahren dar.

In einer bevorzugten Ausführungsform umfasst das Verfahren ferner ein Bestätigen einer Bindung des Objekts an das Individuum auf der Grundlage eines positiven Vergleichs der gesicherten Abbilder der ersten und zweiten algebraischen Instanz. Bei einer Übereinstimmung kann die Objektbindung bestätigt werden. Bei einer Abweichung kann die Objektbindung abgelehnt werden.

In einer bevorzugten Ausführungsform werden im Rahmen der verwendeten algebraischen Instanzen fehlerkorrigierende Rekonstruktionsalgorithmen eingesetzt, die eine Überprüfung ermöglichen, ob ein zur Verifikation erfasstest biometrisches Merkmal ähnlich genug ist zu dem ursprünglich erhobenen biometrischen Merkmal des Individuums, das zum geschützten biometrischen Referenzmerkmal und nachfolgend zu Verifikationsdaten verarbeitet wurde. Ferner können Toleranzintervalle vorgesehen sein, sodass bei einer Abweichung der erhobenen biometrischen Merkmale innerhalb eines Toleranzintervalls das Verifikationsverfahren erfolgreich sein kann, fehlschlagen kann oder es kann eine erneute Erfassung von biometrischen Merkmalen des Individuums angefordert werden.

In einer weiteren Ausführungsform umfasst das Erfassen des mindestens einen biometrischen Merkmals ein Erfassen von biometrischen Informationen des Individuums, ein Ausrichten (Alignment) und Quantisieren der biometrischen Informationen und ein Extrahieren des mindestens einen biometrischen Merkmals auf der Grundlage der quantisierten biometrischen Informationen. Die Erfassung der biometrischen Charakteristiken des Individuums kann somit analog zur Erfassung in der Enrolment-Phase definiert sein, sodass vorab oder über Verfahrensparameter festgelegt sein kann, welche biometrischen Charakteristiken auf welche Art und Weise erfasst und zur weiteren Biometrie-gestützten Verifikation herangezogen werden.

In einer weiteren Ausführungsform ist das Objekt mit Verfahrensparametern verknüpft. Das Rekonstruieren der zweiten algebraischen Instanz kann zumindest teilweise auf den Verfahrensparametern beruhen. Die Verfahrensparameter können bei der Bereitstellung des mit einer Biometrie-gestützten Bindung versehenen Objekts definiert und mit dem Objekt verknüpft sein, wie es in einer oder mehreren Ausführungsformen der vorliegenden Erfindung definiert ist, und können die Verifikation oder einzelne Schritte der Verifikation in beliebiger Kombination konfigurieren.

In einer weiteren Ausführungsform ist das Objekt mit mindestens einem Authentizitätsmerkmal verknüpft, wobei das Verfahren ferner ein Verifizieren des gesicherten Abbilds der ersten algebraischen Instanz und/oder der Verifikationsdaten und/oder der Verfahrensparameter mit dem mindestens einen Authentizitätsmerkmal umfasst. Bei einer fehlerhaften Authentizitätsprüfung kann die Verifikation abgebrochen werden. Falls das Objekt zusätzlich mit Verfahrensparametern verknüpft ist, kann das Authentizitätsmerkmal ebenfalls über den Verfahrensparametern berechnet sein. Ferner kann das Objekt mit einem öffentlichen Schlüssel oder einer Signatur zur Überprüfung des mindestens einen Authentizitätsmerkmals verknüpft sein, um ein stufenweises Überprüfen der verknüpften Daten und der Objektbindung zu ermöglichen.

In einer bevorzugten Ausführungsform ist das Objekt ein physisches Objekt oder ein digitales Objekt.

Gemäß einem weiteren Aspekt der vorliegenden Erfindung ist eine Vorrichtung definiert, die eingerichtet ist, ein Verifikationsverfahren nach einer Ausführungsform der vorliegenden Erfindung durchzuführen. Die Vorrichtung kann mindestens einen Prozessor und einen Speicher mit computerausführbaren Befehlen aufweisen, welche bei Ausführung durch den mindestens einen Prozessor die Vorrichtung einrichten, das Verifikationsverfahren nach einer Ausführungsform durchzuführen. Die Vorrichtung kann eingerichtet sein, ein Objekt zu erhalten, das zumindest mit einem gesicherten Abbild einer ersten algebraischen Instanz und mit Verifikationsdaten verknüpft ist, wobei die Verifikationsdaten basierend auf biometrischen Merkmalen und der ersten algebraischen Instanz berechnet sind, mindestens ein biometrisches Merkmal eines Individuums zu erfassen, eine zweite algebraische Instanz aus dem erfassten mindestens einen biometrischen Merkmal und den Verifikationsdaten zu rekonstruieren, ein gesichertes Abbild der zweiten algebraischen Instanz zu erzeugen und das gesicherte Abbild der ersten algebraischen Instanz mit dem gesicherten Abbild der zweiten algebraischen Instanz zu vergleichen.

In einer weiteren Ausführungsform umfasst die Vorrichtung ein Erfassungsgerät zum Erfassen des mindestens einen biometrischen Merkmals und ein Lesegerät zum Auslesen von Informationen aus dem Objekt, die das gesicherte Abbild der ersten algebraischen Instanz und die Verifikationsdaten repräsentieren.

Gemäß einem weiteren Aspekt der vorliegenden Erfindung ist ein System definiert, das mindestens eine Vorrichtung zum Bereitstellen einer Biometrie-gestützten Objektbindung nach einer Ausführungsform der vorliegenden Erfindung umfasst. Das System kann ein vernetztes System sein, das beispielsweise eine cloudbasierte Bereitstellung von biometrisch gebundenen Objekten an Individuen ermöglicht.

In einer weiteren Ausführungsform kann das System ferner mindestens eine Datenbank mit biometrischen Daten umfassen, die eingerichtet ist, einen Zugriff auf biometrische Merkmale von Individuen bereitzustellen.

Ferner kann in einer Ausführungsform das System mit mindestens einer Lesevorrichtung verbunden sein, welche eingerichtet ist, Objekte mit einer Biometrie-gestützten Bindung zu verifizieren, gemäß Ausführungsformen der vorliegenden Erfindung.

Gemäß einem weiteren Aspekt der vorliegenden Erfindung ist ein Datenträger oder ein computerlesbares Medium angegeben, welches Befehle speichert, die, wenn sie von einer elektronischen Vorrichtung ausgeführt werden, die elektronische Vorrichtung dazu veranlassen, ein Verfahren nach einer Ausführungsform der vorliegenden Erfindung durchzuführen. Beispielsweise kann der Datenträger zur Konfiguration oder Einrichtung einer Vorrichtung zur Bereitstellung von Objekten mit einer Biometrie-gestützten Bindung an Individuen oder einer Vorrichtung zur Verifikation einer Biometrie-gestützten Objektbindung vorgesehen sein. Ferner kann der Datenträger auf einer oder mehreren elektronischen Vorrichtungen in einem System vorgesehen sein und die elektronischen Vorrichtungen gemäß einer Ausführungsform der vorliegenden Erfindung konfigurieren.

Erfindungsgemäß ist vorgesehen, dass Vorrichtungen gemäß Ausführungsformen der vorliegenden Erfindung Rechenvorrichtungen sein können, welche zumindest einen Speicher und eine Verarbeitungseinheit, beispielsweise eine Zentraleinheit oder einen Prozessor, aufweisen, die Befehle aus dem Speicher auslesen kann, die die Verarbeitungseinheit gemäß Ausführungsformen der vorliegenden Erfindung einrichten. Je nach Ausführungsform der vorliegenden Erfindung kann die Recheneinheit ferner mit Kommunikationsschnittstellen versehen sein, die die Recheneinheit an ein Netzwerk und/oder an ein oder mehrere Ein- und Ausgabegeräte koppeln. Entsprechend kann die Rechenvorrichtung an eines oder mehrere Lesegeräte und/oder an einen oder mehrere Drucker und weitere Peripherie gekoppelt sein, um Objekte mit einer Biometrie-gestützten Objektbindung bereitzustellen und/oder diese zu verifizieren.

Erfindungsgemäß ist vorgesehen, dass strukturelle Merkmale oder funktionale Konfigurationen von Vorrichtungen und Systemen gemäß einer oder mehreren Ausführungsformen der vorliegenden Erfindung als funktionale Verfahrensschritte von Verfahren gemäß einer oder mehreren Ausführungsformen der vorliegenden Erfindung vorgesehen sein können. Ferner können einzelne Verfahrensschritte gemäß einer oder mehreren Ausführungsformen der vorliegenden Erfindung als eine funktionale Konfiguration oder als entsprechend konfigurierte strukturelle Merkmale von Vorrichtungen gemäß einer oder mehreren Ausführungsformen der vorliegenden Erfindung in beliebiger Kombination vorgesehen sein.

Weitere Vorteile des erfindungsgemäßen Verfahrens zum Bereitstellen einer Biometrie-gestützten Objektbindung, des erfindungsgemäßen Verfahrens zum Verifizieren einer Biometrie-gestützten Objektbindung, der erfindungsgemäßen Vorrichtungen und des Systems ergeben sich aus der folgenden Beschreibung, in der die Erfindung anhand von Ausführungsbeispielen unter Bezugnahme auf die beigefügten Zeichnungen näher erläutert wird. Darin zeigen:

KURZE BESCHREIBUNG DER ZEICHNUNGEN

| | |
|---|---|
| Figur 1 | eine schematische Darstellung eines Systems zur Bereitstellung und Verifikation von Objekten mit einer Biometrie-gestützten Bindung an Individuen gemäß einer Ausführungsform der vorliegenden Erfindung, |
| Figuren 2A und 2B | Beispiele von biometrischen Merkmalen, die bei Ausführungsformen der vorliegenden Erfindung anwendbar sind, |
| Figur 3 | ein Flussdiagramm eines Verfahrens zur Bereitstellung einer Biometrie-gestützten Objektbindung gemäß einer Ausführungsform der vorliegenden Erfindung und |
| Figur 4 | ein Flussdiagramm eines Verfahrens zum Verifizieren einer Biometrie-gestützten Objektbindung gemäß einer Ausführungsform der vorliegenden Erfindung. |

DETAILLIERTE BESCHREIBUNG

In der Beschreibung wird die Konjunktion "oder" als eine nicht ausschließende Disjunktion verstanden, sodass der Ausdruck "A oder B" entweder "A" oder "B" oder "A und B" bedeuten kann. Ferner definieren der Begriff algebraische Instanz und entsprechende Berechnungen basierend auf der algebraischen Instanz eine konkrete Implementierung eines Berechnungsverfahrens, welches die algebraische Instanz oder entsprechende Berechnungen als einzelne funktionale Module implementieren kann, als Software oder als Hardware in beliebiger Kombination, sodass eine entsprechend eingerichtete elektronische Vorrichtung das Berechnungsverfahren auf der zugrunde liegenden Hardware oder Hardwaremodulen, welche zumindest mit Software konfiguriert sein können, bereitstellt.

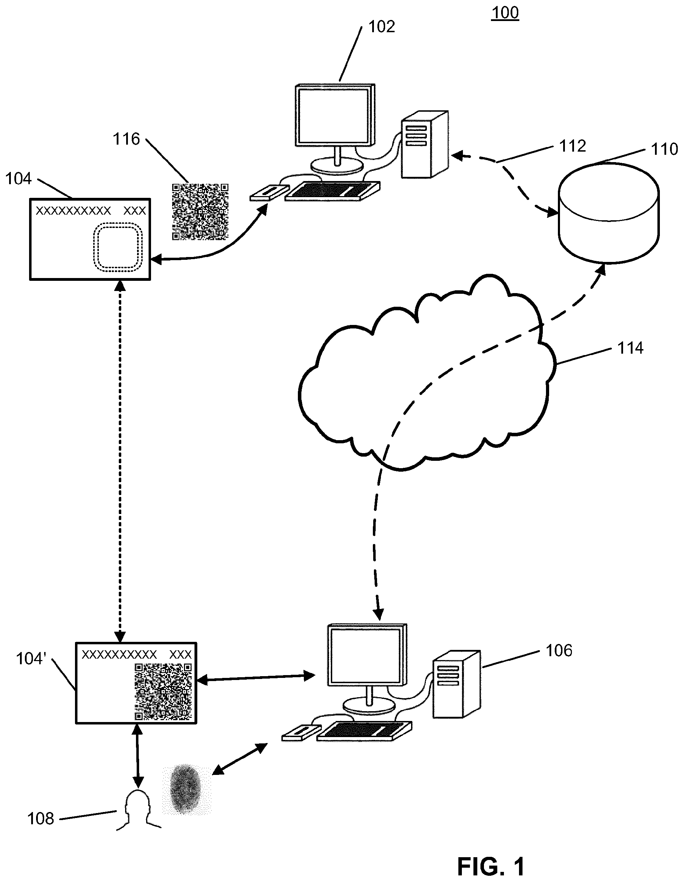

Figur 1 illustriert schematisch ein System, welches zur Bereitstellung und Verifikation von Objekten mit einer Biometrie-gestützten Bindung an Individuen gemäß einer oder mehreren Ausführungsformen der vorliegenden Erfindung verwendbar ist.

Das System 100 umfasst eine Vorrichtung 102, welche eingerichtet sein kann, ein Objekt 104 mit Informationen zu verknüpfen, welche eine Bindung des Objekts 104 an ein Individuum erlauben, und so ein an das Individuum gebundenes Objekt 104' bereitzustellen. Das Individuum kann beispielsweise eine Person (oder eine andere individuelle Entität) sein. Insoweit im Folgenden auf Personen Bezug genommen wird, sollte verständlich sein, dass dies für die vorliegende Erfindung nicht einschränkend ist. Eine Person stellt vielmehr eine mögliche Art von Individuen dar, an die Objekte gebunden werden können. Weitere Arten von Individuen und insbesondere beliebige individualisierbare Entitäten sind von Ausführungsformen der Erfindung mit umfasst. Das System 100 umfasst eine Lesevorrichtung 106, welche eingerichtet sein kann, eine Objektbindung des Objekts 104' im Hinblick auf eine Person 108 (oder eine andere individuelle Entität) Biometrie-gestützt zu verifizieren. Sowohl Vorrichtung 102 als auch Vorrichtung 106 können gemäß einer oder mehreren Ausführungsformen der vorliegenden Erfindung ausgestaltet sein. Das System 100 umfasst ferner eine Datenbank 110, welche Templates von biometrischen Charakteristiken von Individuen speichern und abrufen kann.

Die Vorrichtung 102 kann eingerichtet sein, zur Bereitstellung einer Objektbindung des Objekts 104 an ein Individuum, beispielsweise eine Person, auf biometrische Merkmale der Person, beispielsweise auf ein Template, in Datenbank 110 zuzugreifen. Die Datenbank 110 kann als eine separate Datenbank bereitgestellt sein, auf die die Vorrichtung 102 über eine gesicherte Verbindung 112 zugreifen kann, beispielsweise über einen gesicherten Kanal, eine VPN-Verbindung und dergleichen.

Bei einem biometrischen Enrolment-Prozess kann eine Person erstmalig im System 100 registriert und eine (statische oder dynamische) biometrische Modalität oder Charakteristik der Person kann erfasst werden. Die Ergebnisse können in Form von Templates in der Datenbank 110 abgelegt werden. Das System 100 ist nicht auf eine bestimmte Modalität beschränkt. Vielmehr sind beliebige biometrische Charakteristiken einer individualisierbaren Entität denkbar, umfassend Fingerabdrücke, Venenstrukturen, Gesichtsbilder, Augeniris-Strukturen und dergleichen. Ferner können zur Individualisierung von elektronischen Vorrichtungen und Systemen charakterisierende und individualisierende Merkmale abgefragt und in Datenbank 110 abgelegt werden. Zur Steigerung des Informationsgehalts der biometrischen Information können ebenfalls multimodale Kombinationen der biometrischen Merkmale verwendet werden, beispielsweise ein Fingerabdruck und ein Venenbild.

Die Vorrichtung 102 kann zunächst die Datenbank 110 abfragen, um festzustellen, ob biometrische Merkmale für die Person vorliegen. Liegen diese nicht vor, kann die

Vorrichtung 102 die Objektbindung abbrechen oder die biometrischen Merkmale erfassen. Hierzu kann die Person, an die das Objekt 104 gebunden werden soll, direkt vor Ort sein und die Vorrichtung 102 kann an ein oder mehrere Lesegeräten gekoppelt sein, um die biometrischen Merkmale zu erfassen. Alternativ oder zusätzlich kann die Erfassung netzwerkbasiert erfolgen, beispielsweise indem die biometrischen Merkmale von der Person an einem vertrauenswürdigen Ort erfasst und an die Vorrichtung 102, beispielsweise über ein Netzwerk 112 oder cloudbasiert, übertragen werden. Hierzu kann die Vorrichtung 102 (oder eine daran beispielsweise über ein Netzwerk gekoppelte Vorrichtung) einen oder mehrere der nachfolgenden Schritte durchführen:

1. Erfassung von personenbezogenen biometrischen Informationen;
2. Ausrichtung (Alignment) und Skalierung der erfassten biometrischen Informationen;
3. Extraktion (qualitativ hochwertiger) ausgewiesener Merkmale aus den biometrischen Informationen zur Erkennung der Person; und
4. Wahl eines Quantisierungssystems und von Quantisierungsparametern.

Basierend auf einem oder mehreren der Schritte können die biometrischen Merkmale extrahiert, optional in der Datenbank 110 hinterlegt und zur weiteren Verarbeitung in Vorrichtung 102 genutzt werden.

Liegen (qualitativ hochwertige) biometrische Merkmale der zu erkennenden Person vor, kann die Vorrichtung 102 eine zufällige algebraische Instanz wählen und ein gesichertes Abbild der algebraischen Instanz erzeugen. Ferner kann die Vorrichtung 102 die biometrischen Merkmale (beispielsweise in quantisierter Form) in die zufällige algebraische Instanz einbetten oder die biometrischen Merkmale mit der algebraischen Instanz verarbeiten, um eine Verifikation unterstützende Daten zu erzeugen. Auf diese Daten kann in der vorliegenden Beschreibung ebenfalls als Verifikationsdaten Bezug genommen werden.

In dieser Phase, die ebenfalls als Enrolment-Phase bezeichnet werden kann, kann beispielsweise gemäß einer Ausführungsform der vorliegenden Erfindung ein Polynom $f(x) = m_{(k-1)}x^{k-1} + m_{(k-2)}x^{k-2} + \cdots + m_0$ vom Grad k-1 über einem endlichen Körper F(p) zufällig gewählt werden. Dabei können die Koeffizienten von $f(x)$, $S = (m_0, \ldots, m_{(k-1)})$ mit $m_0, \ldots, m_{(k-1)} \in F(p)$, eine geheime Zeichenkette bilden, die bei der Verifikation wieder rekonstruiert werden muss, um eine Übereinstimmung der Zielperson mit der Objektbindung zu bestätigen.

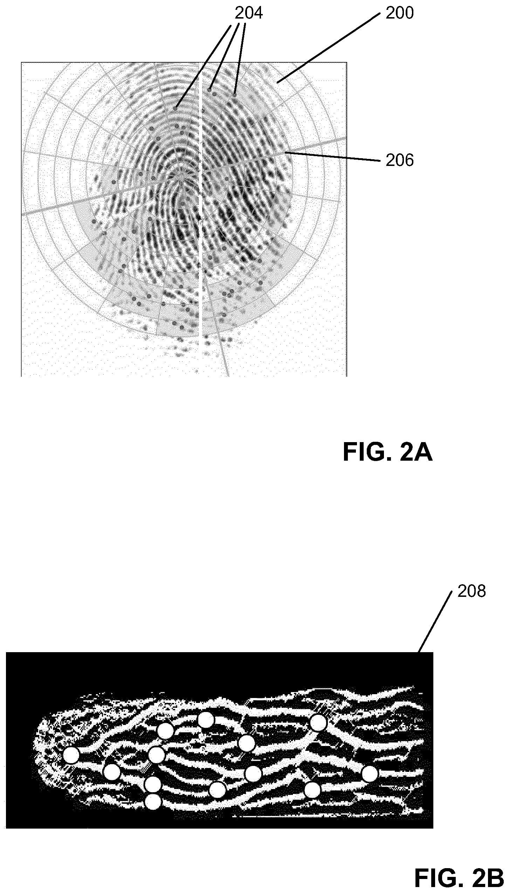

Die Verknüpfung der biometrischen Merkmale kann beispielsweise auf folgende Weise durchgeführt werden: Eine Menge von $n$ biometrischen Merkmalen, beispielsweise quantisierte Minutien eines Fingerabdrucks, kann auf eine Menge von n Elementen $\{x_i\}$ im endlichen Körper F(p) abgebildet werden. Es sollte verständlich sein, dass dem Fachmann Minutien und andere Merkmale eines Fingerabdrucks hinreichend bekannt sind und dass auch weitere biometrische Features eines Fingerabdrucks oder einer anderen biometrischen Charakteristik der Person bei der Bestimmung der biometrischen Merkmale verwendet werden können, wie es beispielsweise im Hinblick auf Figuren 2A und 2B beschrieben ist. Die Verwendung von Minutien stellt lediglich ein Beispiel von biometrischen Merkmalen dar. Die quantisierten Minutien können auf die Menge von n Elementen $\{x_i\}$ im endlichen Körper F(p) abgebildet werden und in das Polynom $f(x)$ eingesetzt werden, wodurch Werte $y_i = f(x_i)$ berechnet werden können. Nachfolgend kann ein zweites (monisches) Polynom vom Grad n als $p'(x) = x^n + \sum_{j=0}^{n-1} \beta_j x^j$ mit $n$ unbekannten Koeffizienten $\beta_j$ definiert werden. Die Koeffizienten können aus einem linearen Gleichungssystem bestimmt werden, das folgende Gestalt haben kann:

$$y_i = p'(x_i) = x_i^n + \sum_{j=0}^{n-1} \beta_j x_i^j.$$

Die daraus eindeutig bestimmbaren Koeffizienten $\beta_0, ... \beta_{n-1}$ können die die Verifikation unterstützenden (Verifikations-)Daten darstellen.

Ferner kann ein Hash-Wert $h(m_{(k-1)}\|m_{(k-2)}\|...\|m_0)$ über die konkatenierten Koeffizienten von $f(x)$ als das gesicherte Abbild der algebraischen Instanz berechnet werden.

Sowohl das gesicherte Abbild der algebraischen Instanz als auch die die Verifikation unterstützenden Daten können auf einem Träger 116 codiert werden und auf oder in dem Objekt 104 gespeichert werden, um das gebundene Objekt 104' zu erzeugen, vorzugsweise derart, dass das Objekt 104' nicht oder nur unter erschwerten Bedingungen von diesen Informationen getrennt werden kann. Hierzu können gängige Verfahren eingesetzt werden, beispielsweise indem ein Entfernen der Informationen sichtbare Spuren hinterlässt oder indem ein Entfernen der Informationen das Objekt 104' als ungültig oder unbenutzbar markiert.

Ferner können zusätzliche Verfahrensparameter auf dem Träger 116 vorgesehen und auf oder in dem Objekt 104' gespeichert werden, welche Parameter in Bezug auf das gesicherte Abbild, die Verifikationsdaten und/oder biometrischen Merkmale angeben können. Die Verfahrensparameter können beispielsweise eine biometrische Modalität, ein Alignment-System, Merkmalsdeskriptoren, ein Quantisierungssystem und -parameter, ein Polynomgrad, ein Primkörper, Domainparameter, ein Signaturverfahren und Ähnliche in beliebiger Zahl und Kombination aufweisen. Darüber hinaus kann das Objekt 104' mit weiteren Daten angereichert sein, welche eine Verifikation der Objektbindung an eine Zielperson unterstützen oder erweitern können, beispielsweise durch Aufbringen einer visuellen Information über die Identität der Zielperson und Ähnliches.

Zusätzlich kann die Vorrichtung 102 eingerichtet sein, mindestens ein kryptographisch gesichertes Authentizitätsmerkmal über alle oder einen Teil der auf dem Objekt 104' gespeicherten Daten zu erzeugen, beispielsweise auf dem gesicherten Abbild der algebraischen Instanz, den die Verifikation unterstützenden Daten und/oder einigen/allen weiteren optionalen Daten. Das mindestens eine kryptographisch gesicherte Authentizitätsmerkmal kann auf dem Träger 116 und/oder auf oder in dem Objekt 104' gespeichert werden, wobei entweder dasselbe Verknüpfungsverfahren wie für das kryptographisch gesicherte Abbild und die Verifikation unterstützenden Daten verwendet werden kann oder ein anderes Speicher- oder Verknüpfungsverfahren zum Einsatz kommen kann. Das Authentizitätsmerkmal kann z. B. eine Signatur darstellen.

Zusätzlich kann die Vorrichtung 102 eingerichtet sein, einen öffentlichen Schlüssel oder Zertifikate zur Prüfung des mindestens einen Authentizitätsmerkmals auf oder in dem Objekt 104' zu speichern. Zur Erzeugung mindestens eines kryptographisch gesicherten Authentizitätsmerkmals über die auf dem Objekt 104' gespeicherten Daten kann ein elektronisches Signaturverfahren, beispielsweise ECDSA, über einen Primkörper F(q) auf elliptischen Kurven (ECC) eingesetzt werden. Hierzu kann eine konkrete elliptische Kurve, auch Domainparameter genannt, verwendet werden. Eine geeignete ECC-Kurve ist beispielsweise BrainpoolP256r1 mit einem Basispunkt $G$. Zusätzlich kann ein Schlüsselpaar bestimmt werden. Hierzu kann ein geheimer Signaturschlüssel $d \in_R [0, w - 1]$ zufällig gewählt werden und der öffentliche Schlüssel $Q = d \times G$ kann hierzu berechnet werden. Der öffentliche Schlüssel Q wird in ein Zertifikat eingebettet und an alle beteiligten Kommunikationsteilnehmer verteilt oder auf dem Objekt 104' (oder dem Träger 116) abgespeichert.

Nachdem die Domainparameter und das Schlüsselpaar bestimmt sind, können die Daten des gesicherten Abbilds der algebraischen Instanz (kAaI), der die Verifikation unterstützenden Daten (VuD) und optional der weiteren Daten, wie beispielsweise der Verfahrensparameter (Sett), signiert werden. Als kryptographische Hash-Funktion $H$ kann beispielsweise SHA-256 verwendet werden. Die Signatur kann anhand des nachfolgenden Algorithmus durchgeführt werden.

> **INPUT:** Domainparameter $D = (q, a, b, G, w, h)$, privater Schlüssel $d$ und Nachricht m $= (kAaI\|VuD\|Sett\|...)$, welche die konkatenierten Werte kAaI, VuD und Sett umfasst

> **OUTPUT:** Signatur $(r, s)$

> 1. Wähle zufälligen flüchtigen Schlüssel $k \in_R [1, w - 1]$;
> 2. Berechne $k \times G = (x_1, y_1)$;
> 3. Berechne $r = x_1 \bmod w$. Falls $r = 0$, gehe zu 1;
> 4. Berechne $e = H(kAaI\|VuD\|Sett\| ...)$;
> 5. Berechne $s = k^{-1}(e + dr) \bmod w$. Falls $s = 0$, gehe zu 1;
> 6. Return $(r, s)$.

Die elektronische Signatur gemäß dem vorstehenden Beispiel kann aus den Größen $r$ und s bestehen.

Eine Verknüpfung des Objekts 104' mit den Daten kann beispielsweise als eine Speicherung auf oder in einem physischen Objekt oder in einem digitalen Objekt erfolgen, beispielsweise mittels eines Barcodes auf dem Träger 116. Es sollte jedoch verständlich sein, dass die vorliegende Erfindung nicht auf die Verwendung eines bestimmten Codes oder einer bestimmten Modalität beschränkt ist. Vielmehr können beliebige optische oder elektromagnetische Codierverfahren und Codes verwendet werden, um die Daten auf dem Träger 116 und/oder auf oder in dem Objekt 104' zu speichern.

Da der Träger 116 eine beschränkte Speicherkapazität aufweisen kann, kann statt einer Speicherung der Daten auf dem Träger 116 eine eindeutige Referenz-ID auf eine gesicherte Quelle gespeichert werden, beispielsweise auf die Datenbank 110 oder eine andere Hintergrunddatenbank, in der die Daten sicher abgelegt und bei der nachfolgenden Verifikation abgerufen werden können.

Wie vorstehend dargelegt, kann in einer Ausführungsform als Speicherinstanz auf dem Objekt 104' ein 2D-Barcode auf den Träger 116 aufgedruckt werden, vorzugsweise ausgeprägt als ein QR-Code. Eine Eigenschaft von QR-Codes besteht darin, dass sie einerseits weit verbreitet sind und eine hohe Speicherkapazität aufweisen. Die zu speichernden Daten, aufweisend das gesicherte Abbild (kAaI) der algebraischen Instanz, die die Verifikation unterstützenden Daten (VuD), die Verfahrensparameter (Sett), die Authentizitätsmerkmale oder eine Signatur (*r, s*) in beliebiger Kombination, können z. B. zunächst konkateniert werden als $kAaI\|VuD\|Sett\|r\|s$. Der konkatenierte String kann z. B. in eine numerische Codierung konvertiert werden, beispielsweise nach einem beliebigen Standard zur Umwandlung von Binärstrings, und dann in den QR-Code codiert werden. Wie es dem Fachmann hinlänglich bekannt ist, kann ein QR-Code als eine zweidimensionale Matrix von Quadraten dargestellt sein, wobei jedes Quadrat entweder farbig, beispielsweise schwarz, oder farblos, beispielsweise weiß, sein kann. Hierbei kann ein schwarzes Quadrat eine binäre 1 und ein weißes Quadrat eine binäre 0 darstellen. Ein QR-Code kann eine alphanumerische Codierung (0-9, A-Z, 9 Sonderzeichen), eine numerische Codierung oder eine Codierung mittels 8-Bit-Byte (ASCII + japanische Zeichen) aufweisen, welche zur Darstellung des konkatenierten Strings verwendet werden können. Der QR-Code kann mit einem geeigneten Lesegerät ausgelesen und wieder in die Parameter kAaI, VuD, Sett, r und s umgewandelt werden.

In einem Ausführungsbeispiel können F(p): $2^{16}$-1, n=34; eine Hash-Funktion h(): SHA-256; als Domainparameter BrainpoolP256r1 gewählt sein. Dies führt bei der Erstellung des QR-Codes (mit einem Error Correction Level von Low) zu folgenden Datengrößen. VuD: 34 Koeffizienten $\beta_j$ à 2 Byte (insgesamt 68 Byte), kAaI: 256 Bit Hash-Wert (insgesamt 32 Byte) und ein kryptographisch gesichertes Authentizitätsmerkmal: ECDSA-Signatur (insgesamt 64 Byte). Es sollte jedoch verständlich sein, dass auch eine andere Parametrisierung gewählt sein kann.

Das gebundene Objekt 104' kann an die Person 108 gebunden sein, wobei in den auf oder in dem Objekt 104' gespeicherten Daten biometrische Merkmale der Person 108 repräsentiert sind, jedoch derart, dass die biometrischen Merkmale nicht in Klartext aus den Daten extrahierbar sind. Die Person 108 kann gegenüber einer Prüfstelle, beispielsweise einer dritten Person, durch eine biometrische Verifikation der im Objekt 104' repräsentierten biometrischen Merkmale jedoch nachweisen, dass sie die zum Objekt 104' zugehörige Person ist.

Beispielsweise kann das Objekt 104' ein Paket sein und das ausgelieferte Paket kann über eine Biometrie-gestützte Objektbindung gemäß Ausführungsformen der vorliegenden Erfindung an einen autorisierten Empfänger gebunden sein. Mithilfe ihrer biometrischen Charakteristiken kann die Person 108 zum Zeitpunkt der Auslieferung gegenüber einem Lieferanten nachweisen, dass sie der autorisierte Empfänger ist.

Ein weiteres bevorzugtes Anwendungsbeispiel stellt ein elektronisches Röntgenbild dar, welches als elektronisches Objekt, beispielsweise als eine Bilddatei, repräsentiert werden kann, in das eine Biometrie-gestützte Bindung gemäß Ausführungsformen der vorliegenden Erfindung eingebracht werden kann. Auf den Inhalt des elektronischen Objekts kann beispielsweise nur nach einer erfolgreichen biometrischen Verifikation zugegriffen werden.

Es sollte jedoch verständlich sein, dass die vorliegende Erfindung weder auf eine Auslieferung von Paketen noch auf eine Bereitstellung von elektronischen Röntgenbildern beschränkt ist und vielmehr jedes physische oder digitale Objekt an ein Individuum gemäß biometrischen Charakteristiken des Individuums gebunden werden kann.

Allgemein kann eine kryptographisch oder durch Transformation gesicherte algebraische Instanz auf einem biometrischen Kryptoverfahren und/oder -system oder einem Transformationsverfahren und/oder -system beruhen, bei dem nicht die ursprünglich gewonnenen biometrischen Merkmale (das biometrische Template) selbst im Klartext gespeichert werden, sondern nur ein geschütztes biometrisches Referenzmerkmal. Das geschützte biometrische Referenzmerkmal kann unter Einbeziehung mathematischer, vorzugsweise fehlerkorrigierender Technologien die erzeugten Verifikationsdaten mit neu erfassten biometrischen Merkmalen (oder einem neuen biometrischen Template) eines Empfängers verifizieren. Hierzu muss weder Besitz noch Kenntnis eines vorab getauschten oder festgelegten Geheimnisses vorhanden sein. Ferner wird ein Erzeugen von unabhängigen, jedoch geschützten biometrischen Referenzmerkmalen über Anwendungsgrenzen hinweg ermöglicht, ohne dass unerwünschte datenbank- oder systemübergreifende Verknüpfungen möglich wären. Die geschützten biometrischen Referenzmerkmale können ferner von den Verifikationsdaten separiert sein, um die Sicherheit und den Schutz der Privatsphäre zu erhöhen. Durch das Erzeugen von voneinander unabhängigen geschützten biometrischen Referenzmerkmalen für Individuen, die über sehr ähnliche biometrische Charakteristiken verfügen, können Vortäuschungen einer falschen Identität durch Identifizieren biometrischer Doppelgänger effektiv verhindert werden. Ferner können Mechanismen für einen Widerruf vorgesehen sein, welche zum Beispiel durch eine zusätzliche Verknüpfung mit einem kryptographisch gesicherten Authentizitätsmerkmal auf Basis von Zertifikaten einer Zertifizierungsstelle eine Sperrung durch die Zertifizierungsstelle festlegen können.

Mit einem biometrischen Referenzmerkmal kann ein geheimer, randomisierter, diversifizierbarer Identitäts-Referenz-String (binärer String im Sinne eines Individuumindividuellen geheimen Schlüssels) oder ein transformiertes oder ein verschlüsseltes biometrisches Template definiert sein, das variabel sein und geändert werden kann, sodass verschiedene geschützte biometrische Referenzmerkmale desselben Individuums dem Individuum nicht zugeordnet werden können. Mit einem geschützten biometrischen Referenzmerkmal kann ein Ergebnis einer Anwendung einer Krypto- oder Transformationsfunktion auf ein biometrisches Referenzmerkmal definiert sein, beispielsweise durch eine Einwegfunktion, das keinen Aufschluss über das ursprüngliche biometrische Referenzmerkmal erlaubt. Vorzugsweise können Verifikationsdaten ebenfalls als ein geschütztes biometrisches Referenzmerkmal aufgefasst werden.

Die gesicherten Abbilder von algebraischen Instanzen und die die biometrische Verifikation unterstützenden Daten auf dem Objekt 104' ermöglichen eine einfache biometrische Verifikation einer Zielperson, an die das Objekt 104, 104' gebunden ist, lassen jedoch keine Rückschlüsse auf die biometrischen Referenzmerkmale in Klartext zu, sodass ein Angreifer die biometrischen Merkmale nicht zum Vortäuschen einer falschen Identität verwenden kann. Andererseits kann sich aber ein autorisierter Empfänger mithilfe seiner biometrischen Merkmale und der auf dem Objekt gespeicherten Daten unmittelbar und in Echtzeit als autorisierter Empfänger gegenüber einer Prüfinstanz auszeichnen.

Um die Biometrie-gestützte Objektbindung des Objekts 104' zu verifizieren, kann die Vorrichtung 106 eingerichtet sein, die auf dem Objekt 104' gespeicherten Daten auszulesen, um entweder direkt die zur Verifikation erforderlichen Daten zu bestimmen oder diese, beispielsweise über eine auf dem Objekt 104' gespeicherte Referenz-ID, aus einer Hintergrunddatenbank, beispielsweise der Datenbank 110, abzurufen.

Die Vorrichtung 106 kann zunächst ein kryptographisch gesichertes Authentizitätsmerkmal und optional einen öffentlichen Schlüssel oder ein Zertifikat zur Prüfung des Authentizitätsmerkmals (basierend auf dem Objekt 104') ermitteln. Die Vorrichtung 106 kann dann nach einer erfolgreichen Echtheitsprüfung des kryptographisch gesicherten Authentizitätsmerkmals mit dem Auslesen eines optional hinterlegten Verfahrensparametersatzes Sett und von optionalen weiteren Daten fortfahren. Schlägt jedoch die Echtheitsprüfung des kryptographisch gesicherten Authentizitätsmerkmals fehl, kann die Verifikation abbrechen.

Basierend auf dem Verfahrensparametersatz Sett und weiteren optionalen Daten kann die Vorrichtung 106 eingerichtet sein, personenbezogene biometrische Informationen der Person 106 zu erfassen, beispielsweise mittels eines Fingerabdrucldesegeräts, eines Venenbildscanners oder eines Irisscanners. Die biometrischen Merkmale können vorgegeben sein oder durch die ausgewiesenen Verfahrensparameter bestimmt sein.

Die erfassten biometrischen Informationen können ausgerichtet (Alignment) und skaliert werden und ausgewiesene Merkmale können aus den biometrischen Informationen zur Erkennung der Person 108 extrahiert werden. Ferner kann das beim Enrolment verwendete Quantisierungssystem mit entsprechenden Quantisierungsparametern angewandt werden, wie es beispielsweise durch die Verfahrensparameter definiert sein kann.

Die Vorrichtung 106 kann eingerichtet sein, die zufällige algebraische Instanz aus den biometrischen Merkmalen der Person 108 und den die Verifikation unterstützenden Daten zu rekonstruieren und ein gesichertes Abbild der rekonstruierten algebraischen Instanz zu berechnen. Nachfolgend kann die Vorrichtung 106 eingerichtet sein, das berechnete gesicherte Abbild der so rekonstruierten algebraischen Instanz mit dem auf dem Objekt 104' gespeicherten gesicherten Abbild zu vergleichen. Bei Übereinstimmung hat sich die Person 108 als diejenige Person authentisiert, an die das Objekt 104' gebunden ist.

Der Ansatz gemäß Ausführungsformen der vorliegenden Erfindung weist eine ausreichend hohe Brute-Force-Angriffsresistenz auf und schließt Korrelationsangriffe explizit aus.

In einer technischen Realisierung des Systems 100 gemäß einer bevorzugten Ausführungsform kann als biometrische Modalität eine Fingerbiometrie verwendet werden und als Alignment ein absolutes Pre-Alignment. Als Merkmalsextraktion kann eine Erfassung von Minutien zum Einsatz kommen, welche mittels Polarkoordinaten von absolut vorausgerichteten Minutien quantisiert werden können. Als algebraische Instanz kann ein zufälliges Polynom von Grad k-1 gewählt werden und als Authentizitätsmerkmal eine ECDSA-Signatur, die auf elliptischen Kurven, beispielsweise Brainpool P256r1, berechnet wird. Die Daten zur Biometrie-gestützten Objektbindung können optisch auf dem Objekt als 2D-Barcode gespeichert werden, zusammen mit einem Verfahrensparametersatz Sett und der ECDSA-Signatur. Es sollte jedoch verständlich sein, dass andere Parameter zur biometrischen Modalität, zum Alignment, zur Merkmalsextraktion, zur Quantisierung, als algebraische Instanz, als Authentizitätsmerkmale oder weitere Möglichkeiten zur Aufbringung der Daten auf die Objekte verwendet werden können, sodass die vorliegende Erfindung durch bestimmte Parameter nicht beschränkt ist. Vielmehr können die Parameter gemäß Ausführungsformen der vorliegenden Erfindung beliebig kombiniert werden.

Figuren 2A und 2B zeigen zwei Beispiele von biometrischen Merkmalen, welche in Ausführungsformen der vorliegenden Erfindung eingesetzt werden können.

Figur 2A zeigt eine schematische Darstellung eines Fingerabdrucks 200, eine Auswahl an biometrischen Merkmalen des Fingerabdrucks oder Minutien 204, welche beispielsweise an End- und Verzweigungspunkten des Fingerabdrucks 200 erkannt werden können, sowie ein Polarkoordinatensystem 206 zur Quantisierung der Minutien 204.

Beim Enrolment kann eine Person erstmalig in einem System registriert werden, beispielsweise mittels der Vorrichtung 102 des Systems 100 aus Figur 1. Der in Figur 2A gezeigte Fingerabdruck kann mittels eines Sensors erfasst werden. Vor einer Extraktion der biometrischen Merkmale kann der Fingerabdruck skaliert und absolut in der Orientierung ausgerichtet werden (Pre-Alignment), um sicherzustellen, dass Merkmale in den erfassten Fingerabdrücken beim Enrolment und der anschließenden Verifikation annähernd fehlerfrei aufeinander abgebildet werden können, um eine gute Fehlerrate zu erzielen. Anschließend können die qualitativ hochwertigen End- und Verzweigungspunkte (Minutien) des Fingerabdrucks mit einem Merkmalsextraktionsverfahren extrahiert werden. Die erkannten Minutien können mittels $\{(a_{ref},\ b_{ref},\ \theta_{ref})\}$ repräsentiert werden. Dabei können $\{(a_{ref},\ b_{ref})\}$ die jeweiligen kartesischen Koordinaten und $\{(\theta_{ref})\}$ den jeweiligen Winkel der Minutien darstellen. Es sollte verständlich sein, dass auch andere Merkmale eines Fingerabdrucks und beispielsweise alignmentfreie Merkmalstypen, wie beispielsweise ein Minutiae Orientation Descriptor, eingesetzt werden können, die beispielsweise in dem Aufsatz Merkle, J. et al: Improved Fuzzy Vault Scheme for Alignment-Free Fingerprint Features, BIOSIG, 2015 beschrieben sind.

Nach der Merkmalsextraktion können die Merkmale $\{(a_{ref},\ b_{ref},\ \theta_{ref})\}$ zunächst in eine Polarkoordinatendarstellung (d, φ, θ) überführt werden mit $d = \sqrt{a^2 + b^2}$ und $\varphi = arg\big(a + \sqrt{-1} \cdot b\big)$ und anschließend mittels der Polarkoordinaten 206 oder Gitterquantisierung auf ein Gitter gerundet werden. Hierzu kann eine konkrete Gitterinstanz und eine Region of Interest (RoI) für den Fingerabdruck gewählt werden, wie es in Figur 2A dargestellt ist. Damit können die Merkmale eines Fingerabdrucks (Minutien) auf eine Menge von Quanten A = $\{quant(a_{ref}, b_{ref}, \theta_{ref})\}$ abgebildet werden.

Die Quantisierung kann beispielsweise gemäß dem Projektbericht des Bundesamtes für Sicherheit in der Informationstechnik "BioKeyS-KBEinweg", 2015, gewählt werden. Hierbei kann *l* > 0 der Quantisierungsparameter für den Wert *d* sein, sodass

$$\lceil d/l \rceil$$

eine ganze Zahl ist, die den Wert von d quantisiert. *m* = {1,2, ...} und *s* = {1,2, ...} beschreiben, in wie viele Quantisierungsstufen die Winkel φ und θ eingeteilt werden können,

$$\lceil \varphi/m \rceil$$

und

$$\lceil \theta/s \rceil$$

sind die jeweiligen Quantisierungen von φ und θ. Wenn *d* im Intervall [0, *D*] liegt, dann gibt es

$$L = \lceil D/l \rceil$$

mögliche Quantisierungen von *d*. Eine Minutie mit den Polarkoordinaten (φ, θ) kann als eine Quant-Nummer dargestellt werden als

$$quant(d, \varphi, \theta) := \lceil d/l \rceil + L \cdot \lceil \varphi/m \rceil + L \cdot m \cdot \lceil \theta/s \rceil.$$

Dem Fachmann ist klar, dass bei Verwendung von anderen biometrischen Charakteristiken oder einem anderen Minutia Feature Type ein anderes Quantisierungssystem gewählt werden kann, um die biometrischen Merkmale zu bestimmen.

Figur 2B zeigt ein Beispiel eines vorausgerichteten Venenbildes 208 mit darin erkannten biometrischen Merkmalen (Venen-Minutien) an End- und Verzweigungspunkten. Vor einer Extraktion der eigentlichen biometrischen Merkmale kann das Venenbild 208 skaliert und absolut in der Orientierung ausgerichtet werden (Pre-Alignment), um sicherzustellen, dass Merkmale in den erfassten Venenstrukturen beim Enrolment und der anschließenden Verifikation annähernd fehlerfrei aufeinander abgebildet werden können, um gute Fehlerraten zu erzielen.

Vorbereitend auf die Extraktion von Venenmerkmalen können die optisch erfassten Venenstrukturen gedünnt und aus dem Bild herausgefiltert werden. Ein Ergebnis ist in Figur 2B dargestellt. Anschließend können qualitativ hochwertige End- und Verzweigungspunkte des Venenmusters mit einem Merkmalsextraktionsverfahren extrahiert werden, die ebenfalls als Venen-Minutien bezeichnet werden können. Die erkannten Venen-Minutien können mittels $\{(a_{ref}, b_{ref}, \theta_{ref})\}$ repräsentiert werden, wobei $\{(a_{ref}, b_{ref})\}$ die jeweiligen kartesischen Koordinaten und $\{(\theta_{ref})\}$ den jeweiligen Winkel der Venen-Minutie darstellen können. Zur Quantisierung von Venen-Minutien kann eine Gitterquantisierung vorgenommen werden.

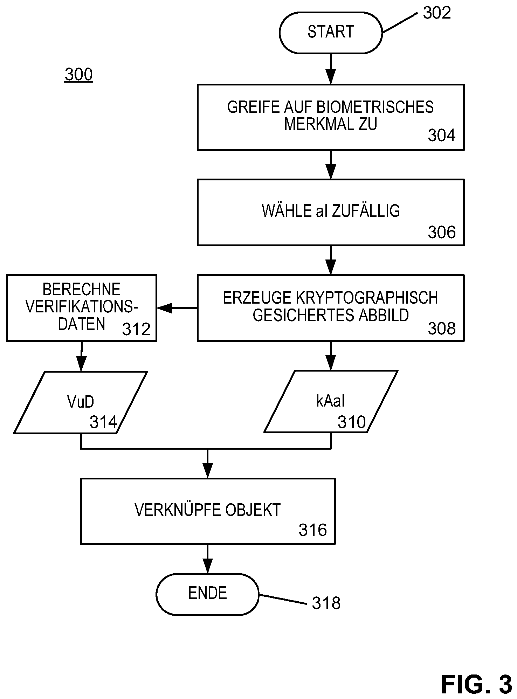

Figur 3 zeigt ein Flussdiagramm eines Verfahrens zum Bereitstellen einer Biometrie-gestützten Objektbindung gemäß einer Ausführungsform der vorliegenden Erfindung. Beispielsweise kann das Verfahren auf Vorrichtung 102 des Systems 100 aus Figur 1 ausgeführt werden.

Das Verfahren 300 kann in Schritt 302 starten und in Schritt 304 auf biometrische Merkmale eines Individuums zugreifen. Beispielsweise kann auf biometrische Merkmale in einer Datenbank zugegriffen werden oder biometrische Merkmale des Individuums können erfasst werden.

In Schritt 306 kann eine algebraische Instanz zufällig gewählt werden. In Schritt 308 kann ein gesichertes Abbild 310 der algebraischen Instanz erzeugt werden. Das gesicherte Abbild 310 kann das in Bezug auf Figur 1 als kAaI bezeichnete gesicherte Abbild sein.

In Schritt 312 können Verifikationsdaten 314 durch Einbetten der biometrischen Merkmale in die algebraische Instanz oder Verarbeitung der biometrischen Merkmale mit der algebraischen Instanz berechnet werden. Die Verifikationsdaten 314 können die in Bezug auf Figur 1 als VuD bezeichneten, eine Verifikation unterstützenden Daten sein.

In Schritt 316 kann ein Objekt mit dem gesicherten Abbild 310 und den Verifikationsdaten 314 verknüpft werden, um das Objekt an das Individuum zu binden. Das Verfahren kann in Schritt 318 enden.

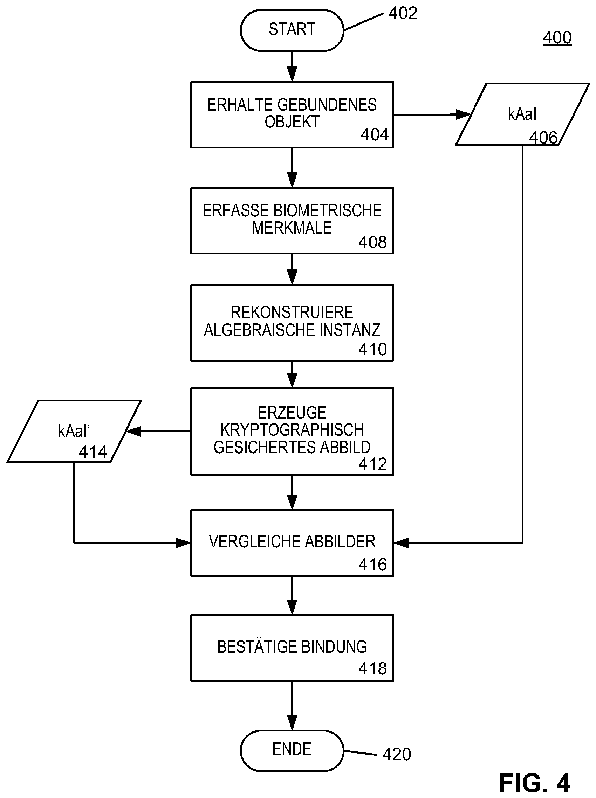

Figur 4 zeigt ein Flussdiagramm eines Verfahrens zum Verifizieren einer Biometrie-gestützten Objektbindung gemäß einer Ausführungsform der vorliegenden Erfindung. Das Verfahren 400 kann beispielsweise auf Vorrichtung 106 des Systems 100 aus Figur 1 ausgeführt werden.

Das Verfahren 400 kann in Schritt 402 starten und in Schritt 404 ein Objekt erhalten, welches Biometrie-gestützt an ein Individuum gebunden ist. Das Objekt kann zumindest mit einem gesicherten Abbild 406 einer ersten algebraischen Instanz und mit Verifikationsdaten verknüpft sein, wobei die Verifikationsdaten durch Einbetten von biometrischen Merkmalen des Individuums in die erste algebraische Instanz oder Verarbeitung der biometrischen Merkmale mit der algebraischen Instanz berechnet sind. Das erhaltene Objekt kann beispielsweise mit einem Verfahren nach einer Ausführungsform der vorliegenden Erfindung berechnet sein, beispielsweise dem Verfahren 300 aus Figur 3. Das erhaltene Objekt kann ferner Objekt 104' aus Figur 1 entsprechen.

Das Objekt kann mit einer Kennung mit Informationen versehen sein oder anderweitig mit den Informationen verknüpft sein, die das gesicherte Abbild 406 und die Verifikationsdaten repräsentieren. Beispielsweise kann das Objekt einen Barcode aufweisen oder mit einem Chip versehen sein oder elektronisch mit den Informationen verknüpft sein. Zusätzlich zu dem gesicherten Abbild 406, auf das ebenfalls als kAaI Bezug genommen werden kann, und zu den Verifikationsdaten, auf die ebenfalls als VuD Bezug genommen werden kann, können die Informationen Verfahrensparameter, mindestens ein Authentizitätsmerkmal zur Verifikation der gespeicherten Informationen und/oder entsprechende Schlüssel oder Zertifikate zur Verifikation des Authentizitätsmerkmals aufweisen.

In einem Ausführungsbeispiel können das gesicherte Abbild kAaI, die Verifikationsdaten VuD, Verfahrensparameter Sett sowie eine Signatur r, s als ein konkatenierter String ($kAaI\|VuD\|Sett\|r\|s$) in einem QR-Code auf dem Objekt gespeichert sein und aus diesem ausgelesen werden.

Für den Fall, dass das Objekt mit einem Authentizitätsmerkmal versehen ist, kann dessen Echtheit geprüft werden. Hierzu können die Daten beispielsweise gehasht werden und die Echtheit der Signatur kann mithilfe eines zugehörigen öffentlichen Schlüssels wie folgt geprüft werden:

*INPUT:* Domainparameter $D = (q, a, b, G, w, h)$, öffentlicher Schlüssel $Q$, Nachricht m = ($kAaI\|VuD\|Sett\|...$) und Signatur ($r, s$)
*OUTPUT:* true oder false

1. Prüfe, ob ($r, s$) im Intervall [1, $n$ - 1] liegt. Falls nicht, return false;
2. Berechne e = $H(kAaI\|VuD\|Sett\|...)$;
3. Berechne $z = s^{-1} \bmod w;$
4. Berechne $u_1 = ez \bmod w$ und $u_2 = rz \bmod w;$
5. Berechne $X = u_1 \times G + u_2 \times Q;$
6. Falls $X$=O, wobei O das neutrale Element des durch die Menge der Punkte der elliptischen Kurve definierten Körpers ist, return false;
7. Berechne $v = x_1 \bmod n$ mit $x_1 \in X;$
8. Falls $v$ = r, return true, sonst false.

Ist die Signaturverifikation erfolgreich, so kann das Verfahren 400 mit Schritt 408 fortfahren. Bei Fehlschlag der Verifikation kann das Verfahren 400 abbrechen, da beispielsweise von einer Fälschung oder Manipulation der Biometrie-gestützten Objektbindung ausgegangen werden kann.

In Schritt 408 werden biometrische Merkmale eines Zielindividuums erfasst. Beispielsweise kann ein Fingerabdruck einer Person mittels eines biometrischen Fingerscanners erfasst werden oder es können beliebige andere biometrische Charakteristiken oder Merkmale in beliebiger Kombination erfasst werden. Alternativ oder zusätzlich kann die Erfassung netzwerkbasiert erfolgen, beispielsweise indem die biometrischen Merkmale des Zielindividuums an einem vertrauenswürdigen Ort erfasst und an die Vorrichtung 106 übertragen werden. Die Übertragung kann über ein Netzwerk 114 oder cloudbasiert erfolgen. Die Erfassung in Schritt 408 kann ferner auf mindestens einem Teil der Verfahrensparameter beruhen, sofern das Objekt mit entsprechenden Informationen versehen ist. In einem Ausführungsbeispiel kann basierend auf den Verfahrensparametern oder vorab festgelegten Parametern ein gescannter Fingerabdruck mittels Pre-Alignments in der Orientierung ausgerichtet und skaliert werden. Die Extraktion der biometrischen Merkmale kann identisch zu dem in der Enrolment-Phase verwendeten Extraktionsverfahren durchgeführt werden. Beispielsweise kann eine Quantisierung in Form von Polarkoordinaten für Fingerabdrücke vorgenommen werden, wie es mit Bezug auf Figur 3 beschrieben worden ist. Für weitere biometrische Charakteristiken können entsprechende Verfahren angewandt werden, um qualitativ hochwertige biometrische Merkmale des Zielindividuums zu gewinnen.

Das Verfahren 400 kann mit Schritt 410 fortfahren, wobei eine weitere algebraische Instanz aus dem erfassten mindestens einen biometrischen Merkmal und den Verifikationsdaten des Objekts rekonstruiert wird.

Die in Schritt 408 gewonnenen biometrischen Merkmale, beispielsweise Minutien eines Fingerabdrucks, können zu quantisierten Merkmalen $A' = \{quant(a'_{query}, b'_{query}, \theta'_{query})\}$ abgeleitet werden und jeweils auf eine Zahl $x_i$ im endlichen Körper $F(p)$ abgebildet werden. Ferner können aus den mit dem Objekt bereitgestellten Verfahrensparametern Koeffizienten $\beta_j$ des Polynoms $p'(x)$ ausgelesen und die berechneten und abgebildeten quantisierten Merkmale aus $A'$ als $x_i'$ in das Polynom $p'(x)$ eingesetzt werden. Die daraus entstandene Punktemenge $V' = \{(x'_i, y'_i) | x_i \in A'\}$ wird anschließend einem Reed-Solomon-Decoder übergeben, der aus der Punktemenge $V'$ die geheimen Koeffizienten $m_i$ des Polynoms $f(x)$ rekonstruieren soll. Dem Fachmann ist bekannt, dass eine erfolgreiche Rekonstruktion von einer Mindestanzahl übereinstimmender Punkte in der Enrolment-Messung und in der Messung in Schritt 408 abhängen kann. Eine erfolgreiche Rekonstruktion ist möglich, wenn mindestens $\lfloor \frac{n-k}{2} \rfloor$ übereinstimmende Punkte in der Enrolment-Messung und in der aktuellen Messung der biometrischen Informationen enthalten sind. Die so zunächst rekonstruierten Koeffizienten $m_i$ des Polynoms $f'(x)$ in Schritt 410 können die weitere algebraische Instanz repräsentieren.

Die rekonstruierte weitere algebraische Instanz kann in Schritt 412 gesichert werden als ein weiteres gesichertes Abbild 414 der rekonstruierten algebraischen Instanz, auf das ebenfalls als kAaI' Bezug genommen werden kann. Hierbei kann kAaI' mit demselben Verfahren wie kAaI gesichert werden. Beispielsweise kann das gesicherte Abbild 414 als ein Hash-Wert über die konkatenierten rekonstruierten Koeffizienten $m'_i$ berechnet werden als $h(m'_{(k-1)} \| m'_{(k-2)} \| \cdots \| m'_0)$.

Das Verfahren kann in Schritt 416 damit fortfahren, die Abbilder kAaI 406 und kAaI' 414 zu vergleichen. Stimmen diese überein, so ist das Zielindividuum als authentisch erkannt und die Biometrie-gestützte Objektbindung kann in Schritt 418 bestätigt werden. Stimmen kAaI 406 und kAaI' 414 jedoch nicht überein, dann scheitert die Verifikation der Biometrie-gestützten Objektbindung.

Obwohl in Schritt 410 zur Rekonstruktion der algebraischen Instanz ein Reed-Solomon-Decoder verwendet werden kann, ist dieses Verfahren lediglich als ein Beispiel aus der Familie der "Polynomial Codes" zu verstehen und es können andere fehlerkorrigierende Codierungsverfahren oder ganz andere Rekonstruktionsverfahren verwendet werden.

Die in der vorstehenden Beschreibung, den Ansprüchen und den Figuren offenbarten Merkmale können sowohl einzeln als auch in beliebiger Kombination für die Verwirklichung der Erfindung und ihrer verschiedenen Ausführungsformen von Bedeutung sein und können in einzelnen Ausführungsformen sowohl einzeln als auch in beliebiger Kombination realisiert sein.

**Patentansprüche**

1. Verfahren zum Bereitstellen eines Objekts mit einer Biometrie-gestützten Bindung an ein Individuum, das die folgenden Schritte umfasst:

   Zugreifen (304) auf biometrische Merkmale eines Individuums;
   zufälliges Wählen (306) einer algebraischen Instanz;
   Erzeugen (308) eines gesicherten Abbilds der algebraischen Instanz;
   Berechnen (312) von Verifikationsdaten basierend auf den biometrischen Merkmalen und der algebraischen Instanz;
   Erzeugen mindestens eines Authentizitätsmerkmals des gesicherten Abbilds und/oder der Verifikationsdaten, und
   Verknüpfen (316) eines Objekts mit dem gesicherten Abbild der algebraischen Instanz, den Verifikationsdaten und dem mindestens einen Authentizitätsmerkmal, um das Objekt an das Individuum zu binden, wobei das Objekt ein physisches oder ein digitales Objekt ist.

2. Verfahren nach Anspruch 1, wobei die algebraische Instanz ein biometrisches Kryptoverfahren aufweist, das auf einem algebraischen Algorithmus basiert, der ein schweres zahlentheoretisches Problem darstellt, wobei die algebraische Instanz fehlerkorrigierend ist.

3. Verfahren nach einem der vorhergehenden Ansprüche, wobei das Abbild der algebraischen Instanz kryptographisch oder mittels einer Transformation gesichert wird.

4. Verfahren nach einem der vorhergehenden Ansprüche, wobei die algebraische Instanz auf einem Polynom $f(x) = m_{k-1}x^{k-1} + m_{(k-2)}x^{k-2} + \cdots + m_0$ vom Grad k-1 über einem endlichen Körper $F(p)$ basiert und die Verifikationsdaten aus Koeffizienten eines linearen Gleichungssystems mit in das Polynom eingesetzten Werten der biometrischen Merkmale berechnet werden.

5. Verfahren nach einem der vorhergehenden Ansprüche, das ferner ein Erfassen der biometrischen Merkmale des Individuums umfasst, wobei das Erfassen ein Erfassen von biometrischen Informationen des Individuums, ein Ausrichten und Quantisieren der biometrischen Informationen und ein Extrahieren und Transformieren der biometrischen Merkmale auf der Grundlage der quantisierten biometrischen Informationen umfasst.

6. Verfahren nach einem der vorhergehenden Ansprüche, wobei die biometrischen Merkmale in einer Datenbank abgelegt sind und das Zugreifen (304) auf die biometrischen Merkmale ein Abrufen der biometrischen Merkmale aus der Datenbank aufweist.

7. Verfahren nach einem der vorhergehenden Ansprüche, wobei das Berechnen (312) der Verifikationsdaten auf Verfahrensparametern basiert und das Verknüpfen (316) ein Verknüpfen des Objekts mit dem gesicherten Abbild, den Verifikationsdaten und den Verfahrensparametern aufweist.

8. Verfahren nach einem der vorhergehenden Ansprüche, das ferner ein Speichern eines öffentlichen Schlüssels und/oder eines Zertifikats zur Prüfung des mindestens einen Authentizitätsmerkmals umfasst.

9. Verfahren nach einem der vorhergehenden Ansprüche, wobei das Objekt ein physisches Objekt ist und das Verknüpfen (316) ein Versehen des Objekts mit einer Kennung umfasst, die zumindest Informationen aufweist, die zumindest das gesicherte Abbild und die Verifikationsdaten repräsentieren, wobei das Versehen des Objekts mit der Kennung ein Aufbringen eines Trägers mit den Informationen auf oder in dem Objekt oder ein Ändern einer Struktur des Objektes basierend auf den Informationen umfasst; oder wobei das Objekt ein digitales Objekt ist, das mit Informationen verknüpft wird, die zumindest das gesicherte Abbild und die Verifikationsdaten repräsentieren.

10. Vorrichtung, die eingerichtet ist, das Verfahren nach einem der vorhergehenden Ansprüche durchzuführen.

11. Vorrichtung nach Anspruch 10, die einen Drucker umfasst, der das Objekt mit einer Kennung versieht, die Informationen aufweist, die zumindest das gesicherte Abbild und die Verifikationsdaten repräsentieren.

12. Verfahren zum Verifizieren eines Objekts mit einer Biometrie-gestützten Bindung an ein Individuum, das die folgenden Schritte umfasst:

Erhalten (404) eines Objekts, wobei das Objekt ein physisches oder ein digitales Objekt ist, das zumindest mit einem gesicherten Abbild einer ersten algebraischen Instanz, mit Verifikationsdaten und mit mindestens einem Authentizitätsmerkmal verknüpft ist, wobei die Verifikationsdaten basierend auf biometrischen Merkmalen und der ersten algebraischen Instanz berechnet sind;
Verifizieren des gesicherten Abbilds der ersten algebraischen Instanz und/oder der Verifikationsdaten mit dem mindestens einen Authentizitätsmerkmal;
Erfassen (408) mindestens eines biometrischen Merkmals eines Individuums;
Rekonstruieren (410) einer zweiten algebraischen Instanz aus dem erfassten mindestens einen biometrischen Merkmal und den Verifikationsdaten;
Erzeugen (412) eines gesicherten Abbilds der zweiten algebraischen Instanz; und
Vergleichen (416) des gesicherten Abbilds der ersten algebraischen Instanz mit dem gesicherten Abbild der zweiten algebraischen Instanz.

13. Verfahren nach Anspruch 12, das ferner ein Bestätigen (418) einer Bindung des Objekts an das Individuum auf der Grundlage eines positiven Vergleichs der gesicherten Abbilder der ersten und zweiten algebraischen Instanz umfasst und wobei das Objekt ferner mit Verfahrensparametern verknüpft ist und das Rekonstruieren (410) der zweiten algebraischen Instanz zumindest teilweise auf den Verfahrensparametern basiert.

14. Vorrichtung, die eingerichtet ist, das Verfahren nach einem der Ansprüche 12 bis 13 durchzuführen, wobei die Vorrichtung ein Erfassungsgerät zum Erfassen des mindestens einen biometrischen Merkmals und ein Lesegerät zum Auslesen von Informationen aus dem Objekt umfasst, die das gesicherte Abbild der ersten algebraischen Instanz und die Verifikationsdaten repräsentieren.

15. System, umfassend:

mindestens eine Vorrichtung nach einem der Ansprüche 10, 11 oder 14; und
mindestens eine Datenbank mit biometrischen Daten, die eingerichtet ist, Zugriff auf biometrische Merkmale von Individuen bereitzustellen.

**Claims**

1. A method for providing an object with biometrics-based binding to an individual, comprising:

accessing (304) biometric features of an individual;
randomly selecting (306) an algebraic instance;
generating (308) a secured representation of the algebraic instance;
computing (312) verification data based on the biometric features and the algebraic instance;
generating at least one authenticity feature of the secured representation and/or the verification data, and
associating (316) an object with the secured representation of the algebraic instance,
the verification data, and the at least one authenticity feature to bind the object to the individual, wherein the object is a physical or a digital object.

2. The method of claim 1, wherein the algebraic instance comprises a biometric cryptographic method based on an algebraic algorithm representing a hard number-theoretic problem, wherein the algebraic instance is error-correcting.

3. The method of any of the preceding claims, wherein the representation of the algebraic instance is secured cryptographically or by means of a transformation.

4. The method of any of the preceding claims, wherein the algebraic instance is based on a polynomial $f(x) = m_{k-1}x^{k-1} + m_{(k-2)}x^{k-2} + \cdots + m_0$ of degree k-1 over a finite field $F(p)$ and the verification data is computed from coefficients of a linear system of equations with values of the biometric features inserted into the polynomial.

5. The method of any of the preceding claims, further comprising acquiring the biometric features of the individual, wherein the acquiring comprises acquiring biometric information of the individual, aligning and quantizing the biometric information, and extracting and transforming the biometric features based on the quantized biometric information.

6. The method of any of the preceding claims, wherein the biometric features are stored in a database and accessing (304) the biometric features comprises retrieving the biometric features from the database.

7. The method of any of the preceding claims, wherein computing (312) the verification data is based on process parameters and associating (316) comprises associating the object with the secured representation, the verification data, and the process parameters.

8. The method of any of the preceding claims, further comprising storing a public key and/or a certificate for verification of the at least one authenticity feature.

9. The method of any of the preceding claims, wherein the object is a physical object and associating (316) comprises providing the object with an identifier comprising at least information representing at least the secured representation and the verification data, wherein providing the object with the identifier comprises applying a carrier with the information on or in the object or changing a structure of the object based on the information; or wherein the object is a digital object associated with information representing at least the secured representation and the verification data.

**10.** An apparatus adapted to perform the method of any of the preceding claims.

**11.** The apparatus of claim 10, comprising a printer providing the object with an identifier comprising information representing at least the secured representation and the verification data.

**12.** A method for verifying an object with biometrics-based binding to an individual, comprising:

> obtaining (404) an object, wherein the object is a physical or a digital object associated with at least a secured representation of a first algebraic instance, with verification data, and with at least one authenticity feature, wherein the verification data is computed based on biometric features and the first algebraic instance;
> verifying the secured representation of the first algebraic instance and/or the verification data with the at least one authenticity feature;
> acquiring (408) at least one biometric feature of an individual;
> reconstructing (410) a second algebraic instance from the acquired at least one biometric feature and the verification data;
> generating (412) a secured representation of the second algebraic instance; and
> comparing (416) the secured representation of the first algebraic instance with the secured representation of the second algebraic instance.

**13.** The method of claim 12, further comprising confirming (418) binding of the object to the individual based on a positive comparison of the secured representations of the first and second algebraic instances, and wherein the object is further associated with process parameters and reconstructing (410) the second algebraic instance is based at least in part on the process parameters.

**14.** An apparatus adapted to perform the method of any of claims 12 to 13, the apparatus comprising an acquisition device for acquiring the at least one biometric feature and a reader device for reading information from the object representing the secured representation of the first algebraic instance and the verification data.

**15.** A system comprising:

> at least one apparatus according to any of claims 10, 11 or 14; and
> at least one database with biometric data adapted to provide access to biometric features of individuals.

**Revendications**

**1.** Procédé pour fournir à un objet une liaison basée sur la biométrie à un individu, comprenant :

> l'accès (304) à des caractéristiques biométriques d'un individu ;
> la sélection aléatoire (306) d'une instance algébrique ;
> la génération (308) d'une représentation sécurisée de l'instance algébrique ;
> le calcul (312) de données de vérification sur la base des caractéristiques biométriques et de l'instance algébrique ;
> la génération d'au moins une caractéristique d'authenticité de la représentation sécurisée et/ou des données de vérification, et
> l'association (316) d'un objet à la représentation sécurisée de l'instance algébrique, aux données de vérification, et à l'au moins une caractéristique d'authenticité pour lier l'objet à l'individu, dans lequel l'objet est un objet physique ou numérique.

**2.** Procédé selon la revendication 1, dans lequel l'instance algébrique comprend un procédé cryptographique biométrique basé sur un algorithme algébrique représentant un problème difficile de théorie des nombres, dans lequel l'instance algébrique est est correctrice d'erreurs.

**3.** Procédé selon l'une quelconque des revendications précédentes, dans lequel la représentation de l'instance algébrique est sécurisée cryptographiquement ou au moyen d'une transformation.

**4.** Procédé selon l'une quelconque des revendications précédentes, dans lequel l'instance algébrique est basée sur un polynôme $f(x) = m_{k-1}x^{k-1} + m_{(k-2)}x^{k-2} + ... + m_0$ de degré k-1 sur un champ fini $F(p)$ et les données de vérification sont calculées à partir de coefficients d'un système linéaire d'équations avec des valeurs des caractéristiques biométriques insérées dans le polynôme.

5. Procédé selon l'une quelconque des revendications précédentes, comprenant en outre l'acquisition des caractéristiques biométriques de l'individu, dans lequel l'acquisition comprend l'acquisition d'informations biométriques de l'individu, l'alignement et la quantification des informations biométriques, et l'extraction et la transformation des caractéristiques biométriques sur la base des informations biométriques quantifiées.

6. Procédé selon l'une quelconque des revendications précédentes, dans lequel les caractéristiques biométriques sont stockées dans une base de données et l'accès (304) aux caractéristiques biométriques comprend la récupération des caractéristiques biométriques à partir de la base de données.

7. Procédé selon l'une quelconque des revendications précédentes, dans lequel le calcul (312) des données de vérification est basé sur des paramètres de processus et l'association (316) comprend l'association de l'objet à la représentation sécurisée, aux données de vérification, et aux paramètres de processus.

8. Procédé selon l'une quelconque des revendications précédentes, comprenant en outre le stockage d'une clé publique et/ou d'un certificat pour la vérification de l'au moins une caractéristique d'authenticité.

9. Procédé selon l'une quelconque des revendications précédentes, dans lequel l'objet est un objet physique et l'association (316) comprend la fourniture à l'objet d'un identifiant comprenant au moins des informations représentant au moins la représentation sécurisée et les données de vérification, dans lequel la fourniture à l'objet de l'identifiant comprend l'application d'un support avec les informations sur ou dans l'objet ou le changement d'une structure de l'objet sur la base des informations ; ou dans lequel l'objet est un objet numérique associé à des informations représentant au moins la représentation sécurisée et les données de vérification.

10. Appareil adapté pour réaliser le procédé selon l'une quelconque des revendications précédentes.

11. Appareil selon la revendication 10, comprenant une imprimante fournissant à l'objet un identifiant comprenant des informations représentant au moins la représentation sécurisée et les données de vérification.

12. Procédé pour vérifier un objet avec une liaison basée sur la biométrie à un individu, comprenant :

l'obtention (404) d'un objet, dans lequel l'objet est un objet physique ou numérique associé à au moins une représentation sécurisée d'une première instance algébrique, à des données de vérification, et à au moins une caractéristique d'authenticité, dans lequel les données de vérification sont calculées sur la base de caractéristiques biométriques et de la première instance algébrique ;
la vérification de la représentation sécurisée de la première instance algébrique et/ou des données de vérification avec l'au moins une caractéristique d'authenticité ;
l'acquisition (408) d'au moins une caractéristique biométrique d'un individu ;
la reconstruction (410) d'une seconde instance algébrique à partir de l'au moins une caractéristique biométrique acquise et des données de vérification ;
la génération (412) d'une représentation sécurisée de la seconde instance algébrique ; et
la comparaison (416) de la représentation sécurisée de la première instance algébrique à la représentation sécurisée de la seconde instance algébrique.

13. Procédé selon la revendication 12, comprenant en outre la confirmation (418) de la liaison de l'objet à l'individu sur la base d'une comparaison positive des représentations sécurisées des première et seconde instances algébriques, et dans lequel l'objet est en outre associé à des paramètres de processus et la reconstruction (410) de la seconde instance algébrique est basée au moins en partie sur les paramètres de processus.

14. Appareil adapté pour réaliser le procédé selon l'une quelconque des revendications 12 à 13, l'appareil comprenant un dispositif d'acquisition pour acquérir l'au moins une caractéristique biométrique et un dispositif de lecture pour lire des informations à partir de l'objet représentant la représentation sécurisée de la première instance algébrique et les données de vérification.

15. Système comprenant :

au moins un appareil selon l'une quelconque des revendications 10, 11 ou 14 ; et

au moins une base de données avec des données biométriques et adaptée pour fournir un accès à des caractéristiques biométriques d'individus.

**FIG. 1**

**FIG. 2A**

**FIG. 2B**

FIG. 3

START 402

400

ERHALTE GEBUNDENES OBJEKT 404

kAaI 406

ERFASSE BIOMETRISCHE MERKMALE 408

REKONSTRUIERE ALGEBRAISCHE INSTANZ 410

kAaI' 414

ERZEUGE KRYPTOGRAPHISCH GESICHERTES ABBILD 412

VERGLEICHE ABBILDER 416

BESTÄTIGE BINDUNG 418

ENDE 420

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016164682 A1
- WO 0000051244 A1
- US 2017063559 A1
- WO 2007113888 A1

**In der Beschreibung aufgeführte Nicht-Patentliteratur**

- **AUFSATZ MERKLE, J. et al.** Improved Fuzzy Vault Scheme for Alignment-Free Fingerprint Features. *BIOSIG*, 2015